# EUROPEAN PATENT APPLICATION

(11) **EP 4 847 951 A1**
(43) Date of publication of application: **02.12.2026**
(21) Application number: 26180868.7
(22) Date of filing: 25.05.2026
(51) Int. Cl.: G01S 7/481, G01S 17/931

(54) **LIDAR**

(30) Priority: 26.05.2025 CN 202510687445; 26.05.2025 CN 202510687128; 26.05.2025 CN 202510691395; 26.05.2025 CN 202510687241
(71) Applicant: Suteng Innovation Technology Co., Ltd., Shenzhen, Guangdong 518000 (CN)
(72) Inventor: Xia, Longguang, Shenzhen, 518000 (CN); Yu, Zhiqiang, Shenzhen, 518000 (CN); You, Yunbing, Shenzhen, 518000 (CN); Xu, Fenglian, Shenzhen, 518000 (CN); Pan, Shengqiang, Shenzhen, 518000 (CN); Lu, Peixin, Shenzhen, 518000 (CN); Lei, Youxue, Shenzhen, 518000 (CN); Lu, Pan, Shenzhen, 518000 (CN)
(74) Representative: RGTH

(57) **Abstract**

Embodiments of the present application disclose a LiDAR comprising a housing, an optical assembly, a heat-dissipating bracket, and a driving member. The driving member comprises a magnetic member and an electromagnetic winding disposed opposite to each other. The magnetic member is mounted on one of a base of the housing and the heat-dissipating bracket, and the electromagnetic winding is mounted on the other one of the base and the heat-dissipating bracket. The magnetic member and the electromagnetic winding cooperate to drive the heat-dissipating bracket to rotate relative to the base, thereby enabling the optical assembly to rotate relative to the base. In the embodiments of the present application, one of the magnetic member and the electromagnetic winding is directly mounted on the base, eliminating one mounting bracket; the other is directly mounted by reusing the heat-dissipating bracket of the optical assembly, also eliminating one mounting bracket.

## Description

### TECHNICAL FIELD

The present application relates to the technical field of detection equipment, and in particular to a LiDAR.

### BACKGROUND

A LiDAR is a radar system that detects characteristics such as the position and velocity of objects by emitting laser beams. Its working principle is as follows: the transmitting system first emits outgoing laser light toward a detection area for detection purposes, and then the receiving system receives the reflected laser light from objects within the detection area, compares the reflected laser light with the outgoing laser light, and after processing, obtains information about the object such as distance, orientation, altitude, velocity, attitude, and even shape.

In the related art, due to the requirement for the optical assembly to perform 360° rotation, mechanical LiDAR typically has a relatively complex structural design, which is unfavorable for reducing the manufacturing cost of the LiDAR.

In an optical system, stray light is caused by reflection, refraction, diffraction, and scattering phenomena that occur during light propagation, causing light to deviate from its expected optical path. The main sources of stray light include: reflection from the surfaces of optical elements, scattering of light on structural components, and diffraction that may occur when light passes through apertures or other structures, thereby generating stray light.

For LiDAR optical systems, they are relatively sensitive to internal stray light, which can affect the detection performance of the LiDAR.

A LiDAR device obtains relevant information about a target by transmitting detection signals toward the target and then comparing the received signals reflected back from the target with the transmitted signals after appropriate processing. A LiDAR device can accurately measure target position, motion state, and shape, and can detect, identify, discriminate, and track targets. Due to its advantages of fast measurement speed, high precision, and long detection range, it has been widely applied in fields such as intelligent vehicles.

In the related art, the various components of a LiDAR are generally manufactured separately and assembled at a later stage. In conventional chip packaging structures, the receiver chip is first packaged and protected using protective glass and a ceramic substrate, and the ceramic substrate is then soldered onto a circuit board, resulting in an increased overall size of the packaging structure and higher costs.

In the related art, the optical performance of the optical receiving system of a LiDAR is fixed. However, the LiDAR needs to simultaneously detect both nearby target objects and distant target objects. Therefore, the optical performance of the optical receiving system needs to accommodate the reception of both near-range echo light and far-range echo light. No optimization has been made to the optical receiving system for target objects at different distances, resulting in generally mediocre reception of both near-range echo light and far-range echo light, and a decrease in the detection accuracy of the LiDAR.

### SUMMARY

Embodiments of the present application provide a LiDAR to address the problem in the related art that mechanical LiDAR, due to the requirement for the optical assembly to perform 360° rotation, typically has a relatively complex structural design, which is unfavorable for reducing the manufacturing cost of the LiDAR.

Embodiments of the present application provide a LiDAR comprising: a housing comprising a base; an optical assembly disposed within the housing; a heat-dissipating bracket disposed within the housing, wherein the optical assembly is mounted on the heat-dissipating bracket; and a driving member disposed within the housing, the driving member comprising a magnetic member and an electromagnetic winding disposed opposite to each other, the magnetic member being mounted on one of the base and the heat-dissipating bracket, and the electromagnetic winding being mounted on the other one of the base and the heat-dissipating bracket, wherein the magnetic member and the electromagnetic winding cooperate to drive the heat-dissipating bracket to rotate relative to the base, thereby enabling the optical assembly to rotate relative to the base.

In the LiDAR according to the embodiments of the present application, the magnetic member is directly mounted on one of the base and the heat-dissipating bracket, and the electromagnetic winding is directly mounted on the other one of the base and the heat-dissipating bracket. Compared to the related art in which the magnetic member and the electromagnetic winding are each mounted on the base and the optical assembly via separate brackets, the bracket structure can be omitted, thereby reducing the manufacturing cost of the LiDAR.

Moreover, the optical assembly and the magnetic member/electromagnetic winding are both mounted on the heat-dissipating bracket, enabling the heat-dissipating bracket to both improve the heat dissipation efficiency during operation of the optical assembly and serve as a mounting carrier for the magnetic member/electromagnetic winding. That is, the heat-dissipating bracket is reused in the embodiments of the present application, which can reduce the manufacturing cost of the LiDAR.

In summary, the one of the magnetic member and the electromagnetic winding that is mounted on the base is directly mounted on the base, thereby eliminating one mounting bracket; the one of the magnetic member and the electromagnetic winding that is mounted on the heat-dissipating bracket is directly mounted by reusing the heat-dissipating bracket of the optical assembly, also eliminating one mounting bracket. Accordingly, the manufacturing cost of the LiDAR can be significantly reduced.

Embodiments of the present application further provide an optical assembly and a LiDAR, to address the problem in the related art that LiDAR is relatively sensitive to internal stray light, which can affect the detection performance of the LiDAR.

Embodiments of the present application further provide an optical assembly comprising: a transceiver component comprising a transmitter chip and a receiver chip; a transmitting lens, wherein the transmitter chip is located on the light-incident side of the transmitting lens; a receiving lens, wherein the receiver chip is located on the light-exiting side of the receiving lens; and a lens barrel defining a transmitting light-passing aperture and a receiving light-passing aperture, wherein the transmitting lens is located at the transmitting light-passing aperture and the receiving lens is located at the receiving light-passing aperture; wherein at least one of the image side, object side, interior of the transmitting light-passing aperture, and interior of the receiving light-passing aperture of the lens barrel is provided with a light-trapping cavity.

Embodiments of the present application provide a LiDAR comprising: a housing; and the optical assembly described above, wherein the optical assembly is disposed within the housing.

In the optical assembly and LiDAR according to the embodiments of the present application, by providing light-trapping cavities on the lens barrel, the light-trapping cavities can confine stray light within the voids of the light-trapping cavities, reducing the energy level of the stray light, reducing interference of stray light with transmitted and received signals, and improving the detection performance of the LiDAR.

When the image side of the lens barrel is provided with a light-trapping cavity, a light-trapping cavity may be provided at the portion of the lens barrel near the receiver chip and/or at the portion near the transmitter chip, thereby attenuating stray light at the receiver chip and/or the transmitter chip.

When the object side of the lens barrel is provided with a light-trapping cavity, a light-trapping cavity may be provided at the portion of the lens barrel near the light-exiting side of the transmitting light-passing aperture and/or at the portion near the light-incident side of the receiving light-passing aperture, thereby attenuating stray light at the light-exiting side of the transmitting light-passing aperture and the light-incident side of the receiving light-passing aperture.

When the interior of the transmitting light-passing aperture of the lens barrel is provided with a light-trapping cavity, stray light inside the transmitting light-passing aperture can be attenuated.

When the interior of the receiving light-passing aperture of the lens barrel is provided with a light-trapping cavity, stray light inside the receiving light-passing aperture can be attenuated.

Embodiments of the present application further provide a chip packaging structure and a LiDAR, capable of reducing the volume and weight of the chip packaging structure of the LiDAR.

In a first aspect, embodiments of the present application provide a chip packaging structure applied to a LiDAR, the chip packaging structure comprising: a circuit board; a receiver chip mounted on the circuit board; a filter assembly comprising a bracket and a filter, wherein the bracket is disposed over the receiver chip, and the filter is mounted on the bracket and disposed opposite to the receiver chip; and a first adhesive, wherein the bracket is bonded to the circuit board via the first adhesive, and the first adhesive surrounds the periphery of the receiver chip so that the filter assembly and the circuit board define a sealed receiving cavity.

In some embodiments, the first adhesive comprises: an inner ring adhesive bonding an inner peripheral wall surface of the bracket to the circuit board; and an outer ring adhesive bonding an outer peripheral wall surface of the bracket to the circuit board.

In some embodiments, the material of the bracket has an elastic modulus greater than 50,000 MPa, a coefficient of linear thermal expansion greater than 15×10⁻⁶/K, and a thermal conductivity greater than 80 W/(m·K).

In some embodiments, the chip packaging structure further comprises: a second adhesive bonding the bracket to the filter, and located on the side of the filter facing away from the receiver chip.

In some embodiments, the chip packaging structure further comprises: a third adhesive, wherein the receiver chip is bonded to the circuit board via the third adhesive.

In some embodiments, the chip packaging structure further comprises: a transmitter chip mounted on the circuit board and located outside the receiving cavity; and a fourth adhesive, wherein the transmitter chip is bonded to the circuit board via the fourth adhesive.

In some embodiments, the bracket has a receiving window disposed opposite to the receiver chip, the receiving window comprising: a mounting groove recessed from an outer surface of the bracket toward the receiver chip, wherein the filter is mounted within the mounting groove; and a reflection groove recessed from an inner surface of the bracket toward the mounting groove and communicating with the mounting groove, wherein in the receiving direction in which the receiver chip receives echo light, a radial distance between the inner peripheral wall of the reflection groove and the central axis of the receiving window gradually increases to form an annular reflective inclined surface.

In some embodiments, an angle between the reflective inclined surface and the central axis of the receiving window is not less than 30° and not greater than 60°.

In some embodiments, an inner wall surface of the bracket facing the circuit board is provided with a light-reflecting texture structure surrounding the reflection groove, the light-reflecting texture structure comprising: a plurality of protrusions, wherein a concave portion is defined between each two adjacent protrusions.

In some embodiments, in the receiving direction, a cross-sectional area of each protrusion perpendicular to the receiving direction gradually decreases.

In some embodiments, both the filter and the mounting groove are rectangular, and the corner positions of the mounting groove are provided with relief grooves for relieving the corner positions of the filter.

In a second aspect, embodiments of the present application provide a LiDAR comprising: the chip packaging structure described above; and a lens barrel assembly comprising a lens barrel and lenses disposed on the lens barrel, wherein at least a portion of the lenses are located on the side of the filter facing away from the receiver chip.

Based on the chip packaging structure according to the embodiments of the present application, by bonding the bracket and the circuit board via the first adhesive, the filter assembly and the circuit board define a sealed receiving cavity, the receiver chip is mounted on the circuit board and is isolated within the receiving cavity, thereby isolating external contaminants and moisture, preventing corrosion of the optical interface of the receiver chip or device failure, and ensuring the long-term stability of the receiver chip under complex operating conditions. The filter assembly includes the filter, through which echo light can enter the receiving cavity and be received by the receiver chip, ensuring the normal function of the receiver chip and improving the accuracy and precision of the final measurement results of the LiDAR. The receiver chip is mounted on the circuit board, shortening the heat transfer path and improving heat dissipation performance. The overall structure of the chip packaging structure is simple, which can effectively reduce the packaging cost and reduce the volume and weight of the structure for packaging the receiver chip, facilitating a reduction in the overall volume and weight of the LiDAR.

Embodiments of the present application further provide a LiDAR capable of improving the detection capability of the LiDAR.

In a first aspect, embodiments of the present application provide a LiDAR comprising: a transmitting module configured to emit detection light; and a receiving module comprising a receiving lens, a light-modulating element, and a detector, wherein, along the extending direction of the receiving optical axis of the receiving lens, the receiving lens is disposed between the light-modulating element and the detector, the light-modulating element is configured to adjust the flux or transmission direction of echo light at different distances passing through the light-modulating element, the echo light at different distances being formed by reflections of the detection light from target objects at different distances; and the receiving lens is configured to receive the echo light and transmit the echo light to the detector.

In some embodiments, the light-modulating element comprises: a light-refracting member configured to deflect near-range echo light toward the receiving lens so that the near-range echo light can be transmitted to the detector via the receiving lens, thereby improving the detection accuracy of near-range target objects.

In some embodiments, the light-refracting member has a light-incident surface and a light-exiting surface that are non-parallel to each other, the light-incident surface being configured to receive the near-range echo light and deflect it into the light-refracting member, and the light-exiting surface being configured to receive the near-range echo light incident from the light-incident surface and deflect it toward the receiving lens.

In some embodiments, the light-refracting member comprises a cylindrical lens or a wedge prism.

In some embodiments, the light-modulating element comprises: a light-refracting member configured to deflect near-range echo light toward the receiving lens; and a light-transmitting notch disposed on the light-refracting member and disposed opposite to the receiving lens, configured to allow far-range echo light to pass through and be transmitted to the receiving lens.

In some embodiments, the light-modulating element comprises: a light-refracting member configured to deflect near-range echo light toward the receiving lens; and a light-attenuating film disposed on the light-incident side and/or the light-exiting side of the light-refracting member, configured at least to reduce the flux of near-range echo light passing through the light-refracting member.

In some embodiments, the transmitting module comprises a transmitting lens and a laser, wherein the laser is configured to emit detection light and the transmitting lens is configured to receive the detection light and emit it to the external environment of the LiDAR to detect the target objects; wherein the receiving optical axis is parallel to the transmitting optical axis of the transmitting lens.

In some embodiments, the LiDAR further comprises: a circuit board, wherein the laser and the detector are mounted on the same side of the circuit board; and a lens barrel mounted on the circuit board, the lens barrel having a transmitting lens cavity and a receiving lens cavity spaced apart from each other, the transmitting lens being mounted within the transmitting lens cavity and the receiving lens being mounted within the receiving lens cavity; the side of the lens barrel facing away from the circuit board has a light-outlet port and a light-inlet port communicating with the transmitting lens cavity and the receiving lens cavity, respectively, and the light-modulating element is disposed at the light-inlet port.

In some embodiments, the light-inlet port comprises a connected first light-inlet region and second light-inlet region, the receiving optical axis passes through the first light-inlet region, the second light-inlet region is located on the side of the first light-inlet region away from the light-outlet port, and the light-modulating element is disposed at least at the second light-inlet region.

In some embodiments, the side of the lens barrel facing away from the circuit board is provided with a light-blocking rib located between the light-inlet port and the light-outlet port and extending in a direction away from the lens barrel.

In some embodiments, the side of the lens barrel facing away from the circuit board is provided with a positioning rib disposed around the light-inlet port, the positioning rib and the lens barrel forming a mounting groove matching the outer shape of the light-modulating element, the mounting groove communicating with the light-inlet port, and the light-modulating element being installed within the mounting groove.

In some embodiments, the light-modulating element has corner positions, and the corner positions of the mounting groove are provided with relief grooves for relieving the corner positions of the light-modulating element.

Based on the LiDAR according to the embodiments of the present application, by disposing a light-modulating element on the light-incident side of the receiving lens to adjust the transmission direction of echo light formed by reflections of detection light from target objects at different distances passing through the light-modulating element, one embodiment of LiDAR changes the incident angle of near-range echo light so that the near-range echo light that would originally have been unable to fall onto the receiving lens is transmitted to the receiving lens, enabling the near-range echo light transmitted via the receiving lens to be effectively received by the detector to ultimately obtain information data of the corresponding near-range target objects, reducing the near-range blind zone of the LiDAR and improving the detection accuracy of the LiDAR for near-range target objects. Alternatively, another embodiment of LiDAR changes the incident angle of near-range echo light so that at least a portion of the near-range echo light cannot fall onto the receiving surface of the detector, thereby reducing the influence of near-range echo light on the reception of far-range echo light by the detector while also preventing the LiDAR from being blinded due to excessive near-range echo light received by the detector, thereby improving the detection capability of the LiDAR for far-range target objects.

By using the light-modulating element to adjust the flux of echo light formed by reflections of detection light from target objects at different distances passing through the light-modulating element, one embodiment of LiDAR increases the flux of far-range echo light passing through the light-modulating element, thereby further improving the detection capability of the LiDAR for far-range target objects.

### BRIEF DESCRIPTION OF DRAWINGS

In order to more clearly illustrate the technical solutions in the embodiments of the present application or in the prior art, the following briefly introduces the drawings that need to be used in the description of the embodiments or the prior art. Obviously, the drawings described below are only some embodiments of the present application, and those skilled in the art can obtain other drawings based on these drawings without creative effort.
FIG. 1 is a perspective structural view of a LiDAR provided by some embodiments of the present application;
FIG. 2 is a cross-sectional structural view of the LiDAR shown in FIG. 1 from one viewing angle;
FIG. 3 is an exploded structural view of the LiDAR shown in FIG. 1;
FIG. 4 is a cross-sectional structural view of a housing of the LiDAR shown in FIG. 1;
FIG. 5 is a structural view of an optical assembly of the LiDAR shown in FIG. 1;
FIG. 6 is a cross-sectional structural view of an optical assembly of a LiDAR provided by some embodiments of the present application;
FIG. 7 is an exploded structural view of the optical assembly shown in FIG. 6;
FIG. 8 is an exploded structural view of the optical assembly shown in FIG. 6 from another viewing angle;
FIG. 9 is a partial structural view of the optical assembly shown in FIG. 6;
FIG. 10 is a partial structural view of the optical assembly shown in FIG. 6;
FIG. 11 is a structural view of an alternative configuration of the optical assembly shown in FIG. 6;
FIG. 12 is an exploded structural view of the optical assembly shown in FIG. 11;
FIG. 13 is a partial structural view of a LiDAR provided by some embodiments of the present application;
FIG. 14 is a partial perspective structural view of the LiDAR shown in FIG. 13;
FIG. 15 is a cross-sectional structural view of the LiDAR shown in FIG. 13 from another viewing angle;
FIG. 16 is a partial structural view of FIG. 15;
FIG. 17 is a partial exploded structural view of the LiDAR shown in FIG. 13;
FIG. 18 is another partial exploded structural view of the LiDAR shown in FIG. 13;
FIG. 19 is a structural view of an embodiment of the LiDAR of the present application;
FIG. 20 is a structural view of an embodiment of a chip packaging structure of the present application;
FIG. 21 is a cross-sectional view taken along line A-A in FIG. 20;
FIG. 22 is a partial enlarged view of portion B in FIG. 21;
FIG. 23 is an exploded structural view of an embodiment of the chip packaging structure of the present application;
FIG. 24 is an exploded structural view of an embodiment of the LiDAR of the present application;
FIG. 25 is a structural view of an embodiment of the LiDAR of the present application;
FIG. 26 is a view showing the internal structure of an embodiment of the LiDAR of the present application, in which the light-modulating element is a light-refracting member;
FIG. 27 is a cross-sectional view taken along line A-A in FIG. 26;
FIG. 28 is a structural view of a light-refracting member in an embodiment of the LiDAR of the present application;
FIG. 29 is a view showing the internal structure of an embodiment of the LiDAR of the present application, in which the light-modulating element is a light-blocking member;
FIG. 30 is a structural view of a lens barrel in an embodiment of the LiDAR of the present application;
FIG. 31 is a structural view of a lens barrel in another embodiment of the LiDAR of the present application;
FIG. 32 is an exploded structural view of an embodiment of the LiDAR of the present application.

### Description of Reference Numerals:

1 - LiDAR; 10 - housing; 11 - base; 111 - accommodation cavity; 112 - opening; 113 - step; 114 - sleeve; 12 - protective cover; 13 - mounting cavity; 20 - optical assembly; 211 - transmitter chip; 212 - receiver chip; 213 - transceiver board; 2131 - positioning alignment mark; 2132 - limit portion; 2133 - ninth mounting hole; 214 - flexible board; 2141 - bent portion; 23 - transmitting lens; 24 - receiving lens; 25 - lens barrel; 25a - light-trapping cavity; 251 - transmitting light-passing aperture; 252 - receiving light-passing aperture; 253 - connection seat; 254 - glue injection hole; 255 - light-blocking plate; 255a - first light-blocking plate; 255b - second light-blocking plate; 255c - third light-blocking plate; 255d - fourth light-blocking plate; 256 - light-blocking post; 257 - transmitting chamber; 258 - receiving chamber; 259 - partition; 250 - communication opening; 2501 - limit mating portion; 2502 - eighth mounting hole; 26 - optical assembly bracket; 261 - main bracket body; 262 - mounting seat; 263 - necked portion; 264 - flange; 265 - raised portion; 266 - relief portion; 267 - seventh mounting hole; 27 - fixing block; 28 - thermally conductive gel; 30 - heat-dissipating bracket; 31 - first main bracket; 32 - side bracket; 321 - positioning portion; 33 - rotation shaft; 34 - through hole; 40 - driving member; 41 - magnetic member; 42 - electromagnetic winding; 421 - iron core; 4211 - mounting position; 4212 - stator iron core yoke portion; 4213 - stator iron core tooth portion; 4214 - stator iron core tooth tip; 422 - coil; 43 - positioning mating portion; 51 - code disc; 511 - detection portion; 512 - limit hook; 513 - fixing seat; 52 - photoelectric switch; 61 - wireless charging transmitter unit; 62 - wireless charging receiver unit; 71 - bearing; 81 - power board; 82 - main circuit board;
3-10 - chip packaging structure; 3-100 - circuit board; 3-200 - receiver chip; 3-210 - sensing area; 3-300 - filter assembly; 3-310 - bracket; 3-311 - receiving window; 3-3111 - mounting groove; 3-3112 - reflection groove; 3-3113 - reflective inclined surface; 3-3114 - relief groove; 3-312 - light-reflecting texture structure; 3-3121 - protrusion; 3-3122 - concave portion; 3-320 - filter; 3-330 - receiving cavity; 3-400 - first adhesive; 3-410 - inner ring adhesive; 3-420 - outer ring adhesive; 3-500 - second adhesive; 3-600 - third adhesive; 3-700 - transmitter chip; 3-20 - LiDAR; 3-21 - lens barrel assembly; 3-22 - lens barrel; 3-23 - lens;
4-10 - LiDAR; 4-100 - transmitting module; 4-110 - transmitting lens; 4-120 - laser; 4-200 - receiving module; 4-210 - receiving lens; 4-220 - light-modulating element; 4-221 - light-refracting member; 4-2211 - light-incident surface; 4-2212 - light-exiting surface; 4-2213 - normal; 4-222 - light-blocking member; 4-2221 - light-passing notch; 4-230 - detector; 4-300 - circuit board; 4-400 - lens barrel; 4-410 - transmitting lens cavity; 4-420 - receiving lens cavity; 4-430 - light-outlet port; 4-440 - light-inlet port; 4-441 - first light-inlet region; 4-442 - second light-inlet region; 4-450 - light-blocking rib; 4-451 - light-trapping cavity; 4-460 - positioning rib; 4-470 - mounting groove; 4-471 - relief groove; 4-500 - window cover; 4-600 - transmitting optical axis; 4-700 - receiving optical axis; x - first direction; y - second direction; z - third direction.

### DETAILED DESCRIPTION

Reference will now be made in detail to the embodiments of the present application, examples of which are illustrated in the accompanying drawings, wherein like or similar reference numerals refer to the same or similar elements throughout. The embodiments described below with reference to the drawings are exemplary and are intended to be used for explaining the present application, and should not be construed as limiting the present application.

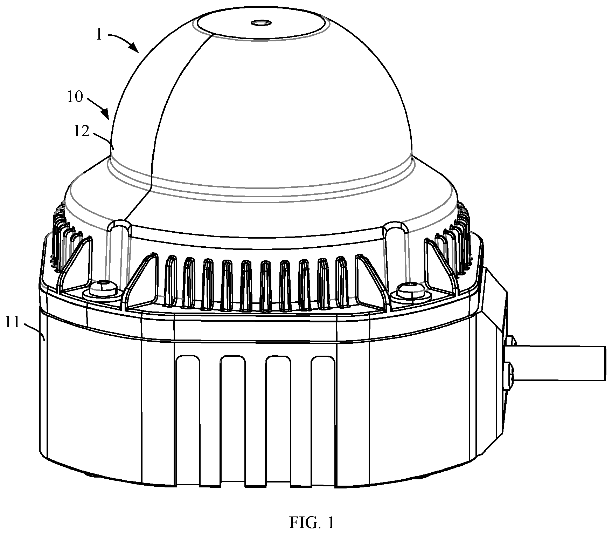

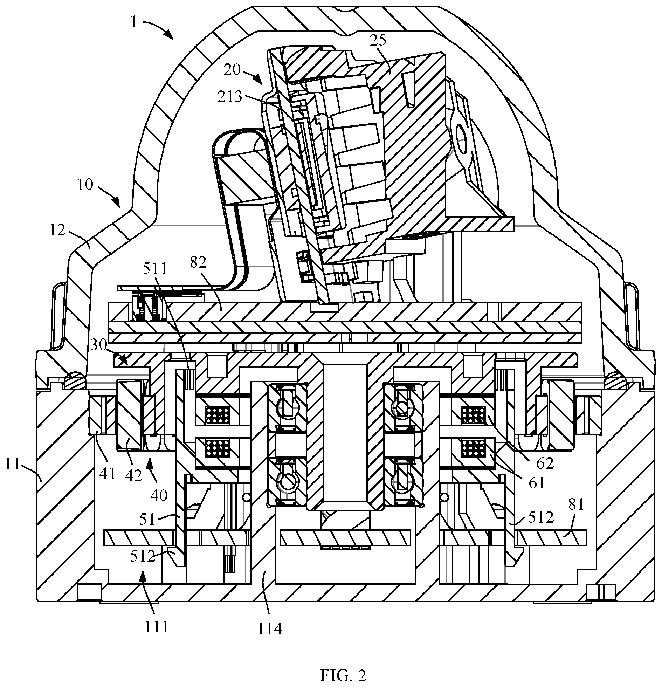

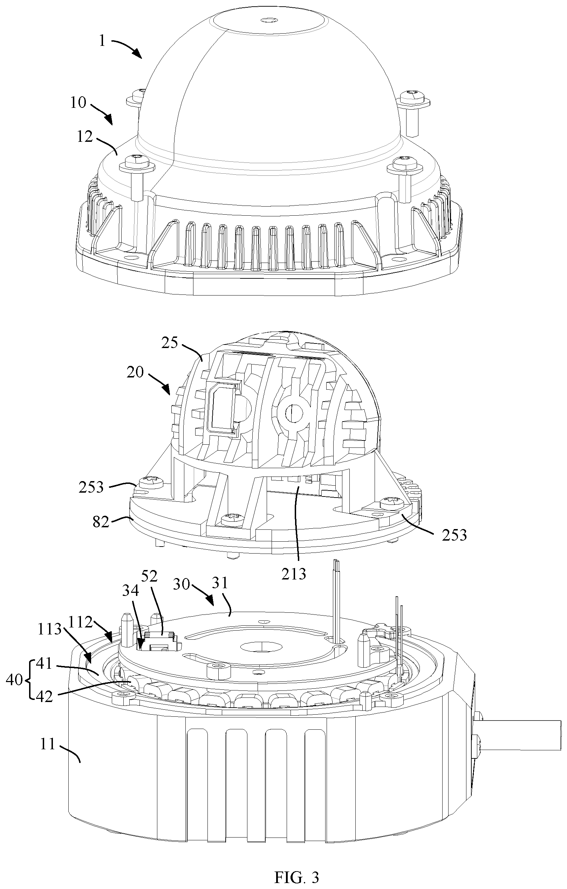

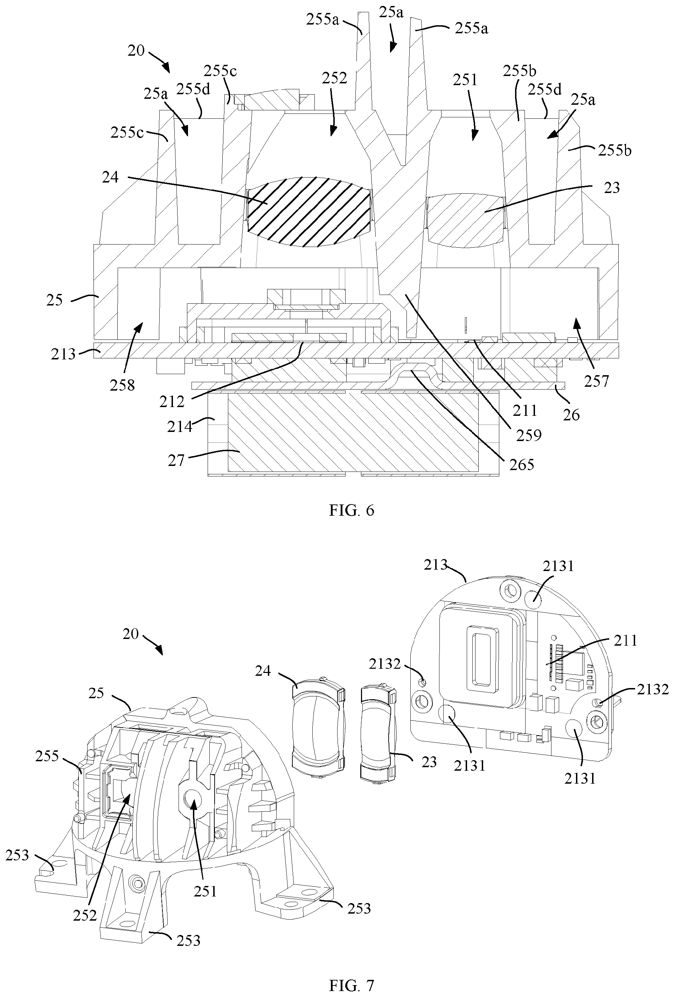

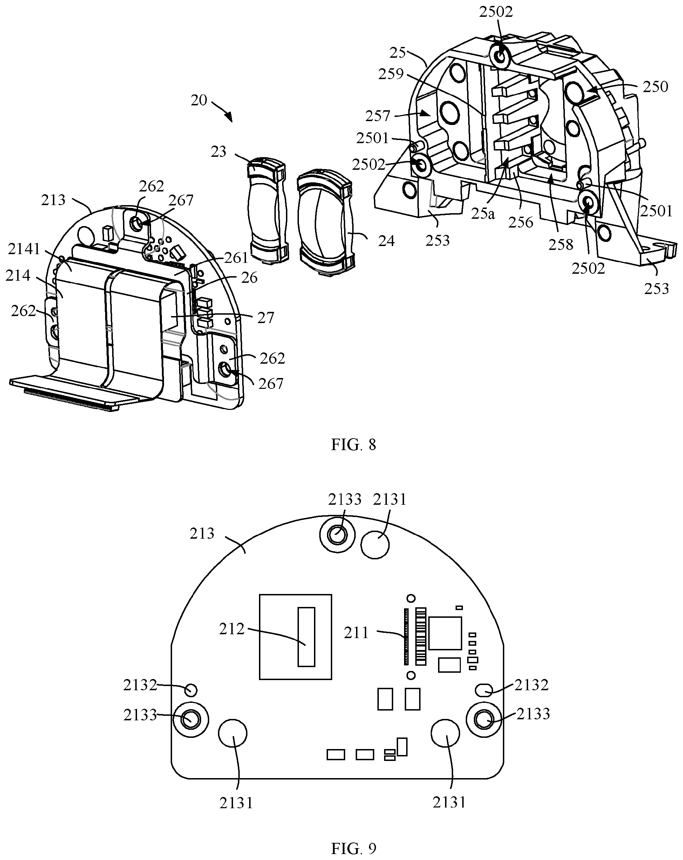

Referring to FIGS. 1 through 9, a LiDAR 1 according to some embodiments of the present application comprises a housing 10, an optical assembly 20, a heat-dissipating bracket 30, and a driving member 40. The housing 10 comprises a base 11. The optical assembly 20 is disposed within the housing 10. The heat-dissipating bracket 30 is disposed within the housing 10, and the optical assembly 20 is mounted on the heat-dissipating bracket 30. The driving member 40 is disposed within the housing 10. The driving member 40 comprises a magnetic member 41 and an electromagnetic winding 42 disposed opposite to each other. The magnetic member 41 is mounted on one of the base 11 and the heat-dissipating bracket 30, and the electromagnetic winding 42 is mounted on the other one of the base 11 and the heat-dissipating bracket 30. The magnetic member 41 and the electromagnetic winding 42 cooperate to drive the heat-dissipating bracket 30 to rotate relative to the base 11, thereby enabling the optical assembly 20 to rotate relative to the base 11.

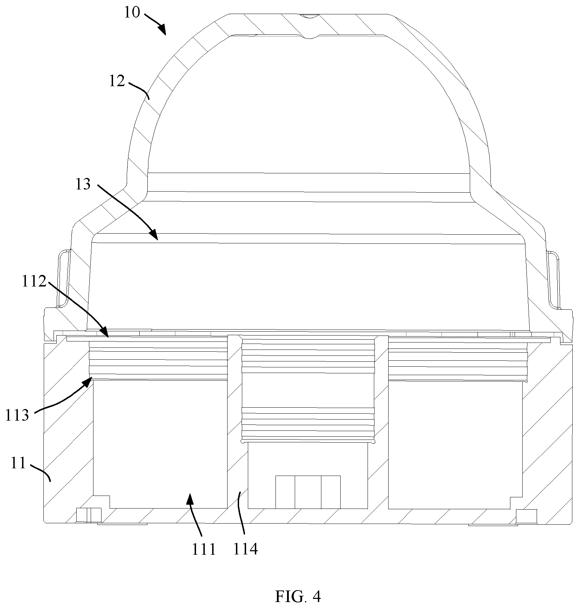

Referring to FIG. 4, the housing 10 comprises the base 11. The base 11 defines an accommodation cavity 111 and an opening 112 communicating with the accommodation cavity 111. An end face of the base 11 at the opening side defines a step 113. In some embodiments, the step 113 is disposed around the rotation axis of the optical assembly 20, i.e., the step 113 is an annular step, and the step surface of the step 113 is an annular surface.

The base 11 is further provided with a sleeve 114 extending in a direction away from the inner bottom wall of the base 11.

The base 11 is used for installing and fixing the device to be installed (such as a vehicle), thereby achieving the installation and fixation of the LiDAR 1 on the device to be installed.

The housing 10 further comprises a protective cover 12. The protective cover 12 is connected to the base 11 and together with the base 11 defines a mounting cavity 13. The optical assembly 20, the heat-dissipating bracket 30, and the driving member 40 are all located within the mounting cavity 13 of the housing 10.

The protective cover 12 is a light-transmitting protective cover, so that the LiDAR 1 can emit detection light through the protective cover 12 toward target objects outside the LiDAR 1, and can receive echo light passing through the protective cover 12. The echo light is formed by reflection of at least a portion of the detection light from the target object.

The protective cover 12 and the base 11 may be fixed by adhesive dispensing, screws, or other means, which is not limited by the embodiments of the present application. The protective cover 12 and the base 11 are sealingly connected to prevent moisture and other contaminants from entering the mounting cavity 13 through the gap between the protective cover 12 and the base 11, which would affect the operation of internal components of the LiDAR 1.

The protective cover 12 may be made of a plastic material, which has a lower cost and is conducive to reducing the cost of the LiDAR 1. At least a portion of the base 11 is made of a metallic material to form an electromagnetic shielding structure, reducing electromagnetic interference between the LiDAR 1 and the external environment. In the embodiments of the present application, the base 11 is entirely made of a metallic material.

It should be noted that during actual production and manufacturing, while maintaining sufficient internal space in the mounting cavity 13, the dimensions of the protective cover 12 may be increased and the dimensions of the base 11 reduced according to requirements, i.e., reducing the amount of metallic material and increasing the amount of plastic material, thereby reducing costs.

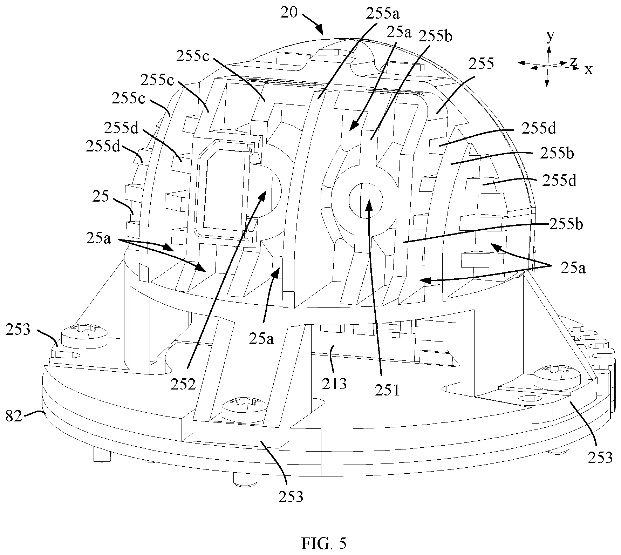

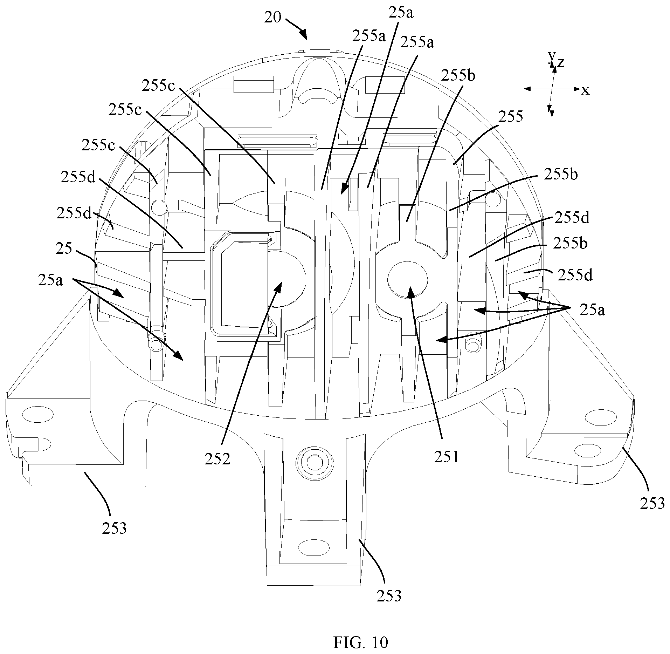

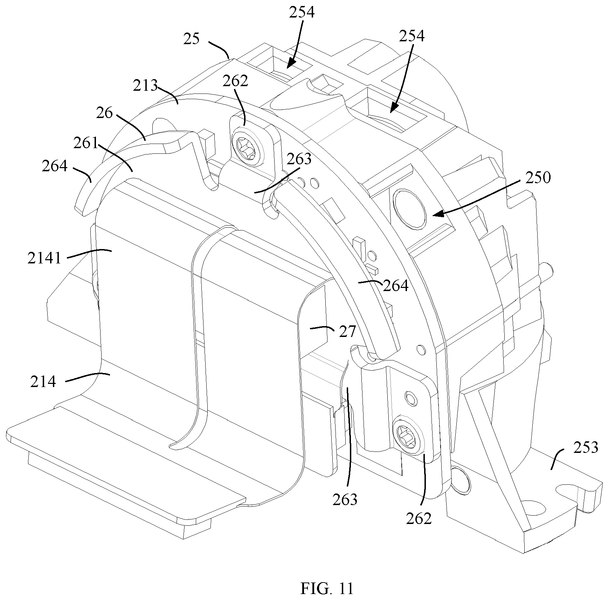

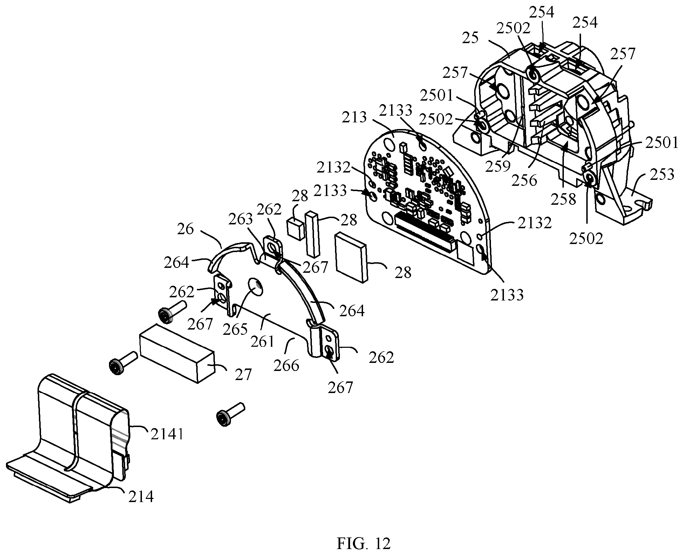

Referring now to FIGS. 5 through 12, the optical assembly 20 will be described in detail. The optical assembly 20 is located within the housing 10 and is electrically connected to the main circuit board 82.

The optical assembly 20 comprises a transceiver component, a transmitting lens 23, a receiving lens 24, and a lens barrel 25.

The transceiver component comprises a transmitter chip 211 and a receiver chip 212.

The transmitter chip 211 is located on the light-incident side of the transmitting lens 23.

The receiver chip 212 is located on the light-exiting side of the receiving lens 24.

The lens barrel 25 defines a transmitting light-passing aperture 251 and a receiving light-passing aperture 252. The transmitting lens 23 is located at the transmitting light-passing aperture 251, and the receiving lens 24 is located at the receiving light-passing aperture 252.

Installing the transmitting lens 23 and the receiving lens 24 within the same lens barrel 25, comparing to installing them in different lens barrels, can save the assembly process of the lens barrel 25 and the housing 10.

Since the heights of the transmitter chip 211 and the receiver chip 212 along the optical axis direction are different, the positions of the transmitting lens 23 and the receiving lens 24 need to be dynamically adjusted according to the image plane positions of the transmitter chip 211 and the receiver chip 212. The above-mentioned transmitting lens 23 and receiving lens 24 are designed separately, which is convenient for dynamically adjusting the positions of transmitting lens 23 and the receiving lens 24 within the lens barrel 25 according to the height of different chip selections. There are various ways to adjust the positions of the transmitting lens 23 and the receiving lens 24 within the lens barrel 25; for example, by using spacers, external fixtures, or directly modifying the structure of the lens support surface within the lens barrel 25. The transceiver component further comprises a transceiver board 213. The transmitter chip 211 and the receiver chip 212 are both disposed on the transceiver board 213, i.e., the transmitter chip 211 and the receiver chip 212 are co-board mounted.

Since the transmitter chip 211 and the receiver chip 212 are co-board mounted, their relative positional accuracy cannot be adjusted by subsequent optical focusing processes as with independent boards. Therefore, the relative positional accuracy has a particularly sensitive effect on the accuracy of the LiDAR 1. In order to improve the relative positional accuracy of the transmitter chip 211 and the receiver chip 212, in the embodiments of the present application, the transceiver board 213 is provided with a plurality of positioning alignment marks 2131.

The assembly process of the receiver chip 212 may include: aligning the receiver chip 212 with the positioning alignment marks 2131 on the transceiver board 213 using its own identification marks, and attaching it to the transceiver board 213. Specifically, visual recognition may be used to extract the identification marks of the receiver chip 212 and the characteristics of the positioning alignment marks 2131 on the transceiver board 213, and then align them according to the theoretical values of their relative coordinates.

The assembly process of the transmitter chip 211 may include: aligning the transmitter chip 211 with the positioning alignment marks 2131 on the transceiver board 213 using its own identification marks, and attaching it to the transceiver board 213. Specifically, visual recognition may be used to extract the identification marks of the transmitter chip 211 and the characteristics of the positioning alignment marks 2131 on the transceiver board 213, and then align them according to the theoretical values of their relative coordinates.

The transceiver board 213 is provided with a limit portion 2132, and the lens barrel 25 is provided with a limit mating portion 2501. The limit portion 2132 is connected to the limit mating portion 2501. The provision of the limit portion 2132 and the limit mating portion 2501 facilitates the positioning of the installation of the transceiver board 213 and the lens barrel 25.

In some embodiments, one of the limit portion 2132 and the limit mating portion 2501 is a limit hole, and the other is a limit protrusion, with at least a portion of the limit protrusion extending into the limit hole. The forming and assembly of the limit protrusion and the limit hole are relatively convenient.

In some embodiments, the limit portion 2132 is a limit hole, and the limit mating portion 2501 is a limit protrusion, i.e., the transceiver board 213 is provided with a limit hole and the lens barrel 25 is provided with a limit protrusion. In other embodiments, the limit portion 2132 is a limit protrusion, and the limit mating portion 2501 is a limit hole, i.e., the transceiver board 213 is provided with a limit protrusion and the lens barrel 25 is provided with a limit hole.

In order for the transceiver chips and transceiver lenses to have high centering accuracy, a high positioning accuracy is maintained between the limit portion 2132 and the positioning alignment marks 2131 during the fabrication of the transceiver board 213. The positional accuracy between the limit portion 2132 and the positioning alignment marks 2131 is ensured by the PCB manufacturing process: using a high-precision CCD drilling machine, the position of the positioning alignment marks 2131 is captured when forming the limit portion 2132. When the distance from the limit portion 2132 to the positioning alignment marks 2131 is less than 100 mm, the positional accuracy requirement from the limit portion 2132 to the positioning alignment marks 2131 is +/-3 mil, i.e., +/-0.075 mm. The limit portion 2132 may be a non-metallized hole.

The transceiver component further comprises a flexible board 214. The flexible board 214 electrically connects the transceiver board 213 and the main circuit board 82. The flexible board 214 is flexible and can adaptively deform according to the available space within the LiDAR 1.

The lens barrel 25 may be made of a plastic material, which has a lower cost and contributes to reducing the cost of the LiDAR 1.

The light-exiting side of the transmitting light-passing aperture 251 and the light-incident side of the receiving light-passing aperture 252 may be designed with a tapered-down opening, which can prevent the introduction of excessive stray light due to an excessively large aperture, while avoiding affecting ranging performance due to an excessively small aperture.

At least one of the image side, object side, interior of the transmitting light-passing aperture 251, and interior of the receiving light-passing aperture 252 of the lens barrel 25 is provided with a light-trapping cavity 25a. The light-trapping cavity 25a can confine stray light within the void of the light-trapping cavity 25a, reduce the energy level of the stray light, reduce interference of stray light with transmitted and received signals, and improve the detection performance of the LiDAR 1.

The image side of the lens barrel 25 refers to the side of the lens barrel 25 near the receiver chip 212. Since the transmitter chip 211 and the receiver chip 212 are located on the same side of the lens barrel 25, providing the image side of the lens barrel 25 with a light-trapping cavity 25a means providing a light-trapping cavity 25a at the portion of the lens barrel 25 near the receiver chip 212 and/or at the portion near the transmitter chip 211, thereby attenuating stray light at the receiver chip 212 and/or the transmitter chip 211.

The object side of the lens barrel 25 refers to the side of the lens barrel 25 near the target object. Since the light-exiting side of the transmitting light-passing aperture 251 and the light-incident side of the receiving light-passing aperture 252 are both near the target object, providing the object side of the lens barrel 25 with a light-trapping cavity 25a means providing a light-trapping cavity 25a at the portion near the light-exiting side of the transmitting light-passing aperture 251 and/or at the portion near the light-incident side of the receiving light-passing aperture 252, thereby attenuating stray light at the light-exiting side of the transmitting light-passing aperture 251 and the light-incident side of the receiving light-passing aperture 252.

When the interior of the transmitting light-passing aperture 251 of the lens barrel 25 is provided with a light-trapping cavity 25a, stray light inside the transmitting light-passing aperture 251 can be attenuated.

When the interior of the receiving light-passing aperture 252 of the lens barrel 25 is provided with a light-trapping cavity 25a, stray light inside the receiving light-passing aperture 252 can be attenuated.

Referring now to FIG. 4, the housing 10 will be further described.

The housing 10 comprises the base 11. The base 11 defines an accommodation cavity 111 and an opening 112 communicating with the accommodation cavity 111.

An end face of the base 11 at the opening side defines a step 113. In some embodiments, the step 113 is disposed around the rotation axis of the optical assembly 20, i.e., the step 113 is an annular step, and the step surface of the step 113 is an annular surface.

The base 11 is further provided with a sleeve 114. The sleeve 114 extends from the inner bottom wall of the base 11 toward the opposite direction of the inner bottom wall.

The base 11 is used for mounting and fixing on a device to be installed (e.g., a vehicle), thereby achieving mounting and fixing of the LiDAR 1 on the device to be installed.

The housing 10 further comprises a protective cover 12. The protective cover 12 is connected to the base 11 and together with the base 11 defines a mounting cavity 13. The optical assembly 20, the heat-dissipating bracket 30, and the driving member 40 are all located within the mounting cavity 13 of the housing 10.

The protective cover 12 is a light-transmitting protective cover, so that the LiDAR 1 can emit detection light through the protective cover 12 toward target objects outside the LiDAR 1, and can receive echo light passing through the protective cover 12. The echo light is formed by reflection of at least a portion of the detection light from the target object.

The protective cover 12 and the base 11 may be fixed by adhesive dispensing, screws, or other means, which is not limited by the embodiments of the present application. The protective cover 12 and the base 11 are sealingly connected to prevent moisture and other contaminants from entering the mounting cavity 13 through the gap between the protective cover 12 and the base 11, which would affect the operation of internal components of the LiDAR 1.

The protective cover 12 may be made of a plastic material, which has a lower cost and is conducive to reducing the cost of the LiDAR 1. At least a portion of the base 11 is made of a metallic material to form an electromagnetic shielding structure, reducing electromagnetic interference between the LiDAR 1 and the external environment. In the embodiments of the present application, the base 11 is entirely made of a metallic material.

It should be noted that during actual production and manufacturing, while maintaining sufficient internal space in the mounting cavity 13, the dimensions of the protective cover 12 may be increased and the dimensions of the base 11 reduced according to requirements, i.e., reducing the amount of metallic material and increasing the amount of plastic material, thereby reducing costs.

Referring now to FIGS. 5 through 12, the optical assembly 20 will be described in detail. The optical assembly 20 is located within the housing 10 and is electrically connected to the main circuit board 82.

By installing the transmitting lens 23 and the receiving lens 24 in the same lens barrel 25, compared to installing them in separate lens barrels, the assembly steps between the lens barrel 25 and the housing 10 can be reduced.

Since the transmitter chip 211 and the receiver chip 212 have different height positions along the optical axis direction, the positions of the transmitting lens 23 and the receiving lens 24 need to be dynamically adjusted according to the image plane positions of the transmitter chip 211 and the receiver chip 212. The transmitting lens 23 and the receiving lens 24 described above are designed as separate components, facilitating dynamic adjustment of their positions within the lens barrel 25 according to the selection height of different chips. The position adjustment of the transmitting lens 23 and the receiving lens 24 within the lens barrel 25 can be done in various ways; for example, by using shims, external fixtures, or directly modifying the structure of the lens bearing surface within the lens barrel 25.

The optical assembly 20 further comprises a plurality of light-blocking plates 255. The light-blocking plates 255 are connected to the lens barrel 25 and protrude from the lens barrel 25. A light-trapping cavity 25a is formed between two adjacent light-blocking plates 255. In this way, the light-blocking plates 255 not only form the light-trapping cavities 25a to attenuate the intensity of stray light, but also act as reinforcing ribs to improve the structural strength of the lens barrel 25, preventing the lens barrel 25 from deforming when fixed (by screw fastening or adhesive bonding), which would affect the optical performance of the LiDAR 1.

The light-blocking plates 255 and the lens barrel 25 may be integrally formed, saving the connection steps between them and improving the reliability of their connection. That is, single-layer or multi-layer light-blocking plates 255 can be integrally formed on the lens barrel 25 to form light-trapping cavities 25a, attenuate the intensity of stray light, and improve the structural strength of the lens barrel 25. The light-blocking plates 255 may be made of a plastic material.

The light-blocking plates 255 have a generally plate-like structure with sufficient surface area to improve the attenuation of stray light, and the plate-like structure is relatively thin, enabling more layers to be arranged within a given weight, thereby forming more light-trapping cavities 25a, improving the attenuation of stray light and improving the structural strength of the lens barrel 25.

At least one of the image side, object side, interior of the transmitting light-passing aperture 251, and interior of the receiving light-passing aperture 252 of the lens barrel 25 is provided with the light-blocking plates 255.

In the embodiments of the present application, at least one of the image side and the object side of the lens barrel 25 is provided with light-blocking plates 255. The spatial dimensions of the image side and object side of the lens barrel 25 are relatively large, which is conducive to the arrangement of the light-blocking plates 255.

The plurality of light-blocking plates 255 include at least one first light-blocking plate 255a. The first light-blocking plate 255a is located between the transmitting light-passing aperture 251 and the receiving light-passing aperture 252 along a first direction x. The first light-blocking plate 255a is disposed opposite to and spaced apart from at least one light-blocking plate 255 along the first direction x to form a light-trapping cavity 25a. The light-trapping cavity 25a corresponding to the first light-blocking plate 255a can suppress mutual crosstalk between the light from the transmitting end and the light from the receiving end; for example, it can suppress the propagation of stray light generated by the transmitted light to the receiving end.

The number of first light-blocking plates 255a may be one or at least two. If the number of first light-blocking plates 255a is one, this first light-blocking plate 255a may form a light-trapping cavity 25a with other light-blocking plates 255. In the embodiments of the present application, the plurality of light-blocking plates 255 include at least two first light-blocking plates 255a spaced apart along the first direction x. Two adjacent first light-blocking plates 255 can form a light-trapping cavity 25a between the transmitting light-passing aperture 251 and the receiving light-passing aperture 252, suppressing mutual crosstalk between the light from the transmitting end and the light from the receiving end via this light-trapping cavity 25a; for example, suppressing the propagation of stray light generated by the transmitted light to the receiving end.

The plurality of light-blocking plates 255 include at least one second light-blocking plate 255b. The second light-blocking plate 255b is located on the side of the transmitting light-passing aperture 251 away from the receiving light-passing aperture 252 along the first direction x. The second light-blocking plate 255b is disposed opposite to and spaced apart from at least one light-blocking plate 255 along the first direction x to form a light-trapping cavity 25a. The light-trapping cavity 25a corresponding to the second light-blocking plate 255b mainly suppresses stray light at the transmitting end itself.

The number of second light-blocking plates 255b may be one or at least two. If the number of second light-blocking plates 255b is one, this second light-blocking plate 255b may form a light-trapping cavity 25a with other light-blocking plates 255. In the embodiments of the present application, the plurality of light-blocking plates 255 include at least two second light-blocking plates 255b spaced apart along the first direction x. Two adjacent second light-blocking plates 255 can form a light-trapping cavity 25a on the transmitting light-passing aperture 251 side, mainly suppressing stray light at the transmitting end itself via this light-trapping cavity 25a.

The plurality of light-blocking plates 255 further include at least one third light-blocking plate 255c. The third light-blocking plate 255c is located on the side of the receiving light-passing aperture 252 away from the transmitting light-passing aperture 251 along the first direction x. The third light-blocking plate 255c is disposed opposite to and spaced apart from at least one light-blocking plate 255 along the first direction x to form a light-trapping cavity 25a. The light-trapping cavity 25a corresponding to the third light-blocking plate 255c mainly suppresses stray light at the receiving end itself.

The number of third light-blocking plates 255c may be one or at least two. If the number of third light-blocking plates 255c is one, this third light-blocking plate 255c may form a light-trapping cavity 25a with other light-blocking plates 255. In the embodiments of the present application, the plurality of light-blocking plates 255 include at least two third light-blocking plates 255c spaced apart along the first direction x. Two adjacent third light-blocking plates 255 can form a light-trapping cavity 25a on the receiving light-passing aperture 252 side, mainly suppressing stray light at the receiving end itself via this light-trapping cavity 25a.

The plurality of light-blocking plates 255 may include one or more of the first light-blocking plate 255a, the second light-blocking plate 255b, and the third light-blocking plate 255c, without limitation.

The first light-blocking plate 255a, the second light-blocking plate 255b, and the third light-blocking plate 255c all extend along a second direction y, wherein the first direction x and the second direction y intersect in a first plane, the first plane is perpendicular to a third direction z, the first direction x is along the distribution direction of the transmitting light-passing aperture 251 and the receiving light-passing aperture 252, and the third direction z is along the distribution direction of the image side and the object side of the lens barrel 25. For example, the first direction x shown in FIG. 5 is generally along the horizontal direction, the second direction y is generally along the vertical direction, and the third direction z is generally along the depth direction.

The plurality of light-blocking plates 255 further include a fourth light-blocking plate 255d. The fourth light-blocking plate 255d extends along the first direction x. At least two of the first light-blocking plate 255a, the second light-blocking plate 255b, and the third light-blocking plate 255c are provided with a fourth light-blocking plate 255d therebetween. The provision of the fourth light-blocking plate 255d facilitates forming more and denser light-trapping cavities 25a, improving the attenuation of stray light and improving the structural strength of the lens barrel 25.

Referring to FIG. 5, the first light-blocking plates 255a, the second light-blocking plates 255b, and the third light-blocking plates 255c all extend generally in the vertical direction and are distributed at intervals in the horizontal direction, while the fourth light-blocking plates 255d extend generally in the horizontal direction and are distributed at intervals in the vertical direction.

It should be noted that the quantity and arrangement of the first light-blocking plates 255a, second light-blocking plates 255b, third light-blocking plates 255c, and fourth light-blocking plates 255d can be determined by simulation. For example, based on structural stiffness simulation of the lens barrel 25, it is determined where on the lens barrel 25 light-blocking plates 255 need to be arranged and the extending direction (e.g., horizontal or vertical) of the light-blocking plates 255 at that location. Based on simulation of stray light near the lens barrel 25, it is determined where light-blocking plates 255 need to be arranged and the quantity of light-blocking plates 255 at that location.

The optical assembly 20 further comprises a plurality of light-blocking posts 256. The light-blocking posts 256 are connected to the lens barrel 25 and protrude from the lens barrel 25. A light-trapping cavity 25a is formed between two adjacent light-blocking posts 256. In this way, the light-blocking posts 256 not only form the light-trapping cavities 25a to attenuate the intensity of stray light, but also act as reinforcing ribs to improve the structural strength of the lens barrel 25.

The light-blocking posts 256 and the lens barrel 25 may be integrally formed, saving the connection steps between them and improving the reliability of their connection. That is, single or multiple light-blocking posts 256 can be integrally formed on the lens barrel 25 to form light-trapping cavities 25a, attenuate the intensity of stray light, and improve the structural strength of the lens barrel 25. The light-blocking posts 256 may be made of a plastic material.

The light-blocking posts 256 have a generally columnar structure with a relatively small cross-section, which is suitable for arrangement in small spaces.

At least one of the image side, object side, interior of the transmitting light-passing aperture 251, and interior of the receiving light-passing aperture 252 of the lens barrel 25 is provided with light-blocking posts 256.

In the embodiments of the present application, at least one of the interior of the transmitting light-passing aperture 251 and the interior of the receiving light-passing aperture 252 of the lens barrel 25 is provided with light-blocking posts 256. The spatial dimensions inside the transmitting light-passing aperture 251 and the receiving light-passing aperture 252 of the lens barrel 25 are relatively small, which is suitable for the arrangement of light-blocking posts 256.

The light-blocking posts 256 extend along the third direction z, wherein the third direction z is along the distribution direction of the image side and the object side of the lens barrel 25. It is understood that the transmitting light-passing aperture 251 and the receiving light-passing aperture 252 extend along the third direction z. Designing the light-blocking posts 256 to also extend along the third direction z facilitates the attenuation of stray light along the extending direction inside the transmitting light-passing aperture 251 and the receiving light-passing aperture 252.

In the embodiments of the present application, light-blocking posts 256 are provided on the side of the interior of the receiving light-passing aperture 252 adjacent to the transmitting light-passing aperture 251. Since the receiving end of the LiDAR 1 is more sensitive to stray light, providing light-blocking posts 256 inside the receiving light-passing aperture 252 to form light-trapping cavities 25a can better attenuate stray light at the receiving end and ensure the detection performance of the LiDAR 1. Arranging the light-blocking posts 256 inside the receiving light-passing aperture 252 on the side adjacent to the transmitting light-passing aperture 251 can, within the limited space, more effectively suppress the propagation of stray light generated by the transmitted light to the receiving end.

It is understood that, when the spatial dimensions are sufficient, light-blocking posts 256 can be provided around the entire circumference of the interior of the receiving light-passing aperture 252 to form light-trapping cavities 25a, without limitation.

The lens barrel 25 is provided with a plurality of connection seats 253 circumferentially spaced apart. The connection seats 253 may be used for mounting and securing the lens barrel 25. For example, the lens barrel 25 may be connected and secured to the heat-dissipating bracket 30 via the connection seats 253.

The lens barrel 25 may be provided with a plurality of connection seats 253 circumferentially spaced apart to make the mounting and securing of the lens barrel 25 more reliable and less prone to warping. The distribution of the plurality of connection seats 253 should be as uniform as possible.

The connection seats 253 are provided with reinforcing ribs. The reinforcing ribs can improve the rigidity of the lens barrel 25 at the connection seats 253. This way, when the lens barrel 25 is being fastened, deformation of the lens barrel and lenses due to the screw fastening force can be minimized as much as possible, thereby preventing optical performance variation and affecting the ranging performance.

A glue injection hole 254 communicating with the transmitting light-passing aperture 251 and/or the receiving light-passing aperture 252 is formed on the side wall of the lens barrel 25. After the transmitting lens 23 is placed within the transmitting light-passing aperture 251, adhesive can be injected into the transmitting light-passing aperture 251 through the glue injection hole 254 to secure the transmitting lens 23 to the lens barrel 25. After the receiving lens 24 is placed within the receiving light-passing aperture 252, adhesive can be injected into the receiving light-passing aperture 252 through the glue injection hole 254 to secure the receiving lens 24 to the lens barrel 25.

The side walls of the transmitting lens 23 and the receiving lens 24 may be ink-coated, so that even if light enters the interior of the lens barrel 25 through the glue injection hole 254, it will be blocked by the side walls of the transmitting lens 23/receiving lens 24 and will not form stray light that affects the operation of the LiDAR 1.

The optical assembly 20 further comprises an optical assembly bracket 26. The optical assembly bracket 26 is mounted on the lens barrel 25, and the transceiver board 213 is located between the optical assembly bracket 26 and the lens barrel 25.

The transceiver board 213 is disposed adjacent to the optical assembly bracket 26, so that the optical assembly bracket 26 can improve the heat dissipation efficiency of the transceiver board 213 during operation of the optical assembly 20, ensuring the operational performance and service life of the transceiver board 213.

The transceiver board 213 is located between the optical assembly bracket 26 and the lens barrel 25, so that when the lens barrel 25 and the optical assembly bracket 26 are assembled and secured together, the transceiver board 213 can be clamped, eliminating the need for a separate mounting step for the transceiver board 213 and reducing assembly costs.

In some embodiments, the optical assembly bracket 26 and the lens barrel 25 may be assembled and secured by fasteners. Specifically, the optical assembly bracket 26 is formed with a seventh mounting hole 267, the lens barrel 25 is formed with an eighth mounting hole 2502, and a fastener passes through the seventh mounting hole 267 and the eighth mounting hole 2502 to secure the optical assembly bracket 26 to the lens barrel 25. The fastener may comprise a bolt, or may comprise a bolt and a nut used in combination with the bolt, without limitation.

In some embodiments, the fastener may secure the optical assembly bracket 26 to the lens barrel 25 while avoiding the transceiver board 213. In other embodiments, the fastener may pass through a ninth mounting hole 2133 in the transceiver board 213 to secure the optical assembly bracket 26 to the lens barrel 25.

A thermally conductive gel 28 is provided between the transceiver board 213 and the optical assembly bracket 26. Heat generated by the transmitter chip 211, receiver chip 212, and other components on the transceiver board 213 can be transferred to the optical assembly bracket 26 through the thermally conductive gel, providing uniform heat dissipation. The optical assembly bracket 26 may be made of an aluminum alloy material, which has good thermal conductivity.

The end of the flexible board 214 away from the transceiver board 213 is located on the side of the optical assembly bracket 26 facing away from the transceiver board 213 and is connected to the optical assembly bracket 26. That is, the optical assembly bracket 26 not only serves the function of uniform heat dissipation, but also serves as a carrier to which the flexible board 214 is attached and secured, preventing the flexible board 214 from causing structural interference due to deformation during operation of the LiDAR 1. The flexible board 214 may be connected to the optical assembly bracket 26 by bonding or other means, without limitation.

The optical assembly bracket 26 comprises a main bracket body 261 and a plurality of mounting seats 262. The main bracket body 261 is disposed opposite to the transceiver board 213. The mounting seats 262 connect the main bracket body 261 to the lens barrel 25. The main bracket body 261 has a sufficient heat dissipation area and is primarily used to improve the heat dissipation performance of the transceiver board 213. A thermally conductive gel 28 may be disposed between the main bracket body 261 and the transceiver board 213. The flexible board 214 may be connected to the main bracket body 261. The mounting seats 262 are primarily used to secure the optical assembly bracket 26 to the lens barrel 25.

The optical assembly bracket 26 comprises a plurality of mounting seats 262 circumferentially spaced apart along the main bracket body 261, so that the mounting and securing of the optical assembly bracket 26 is more reliable and less prone to warping. The distribution of the plurality of mounting seats 262 should be as uniform as possible.

A necked portion 263 is formed at the junction of each mounting seat 262 and the main bracket body 261. The necked portion 263 can act as a crack arrestor, preventing tearing from occurring at the bent area during screw fastening.

The optical assembly bracket 26 further comprises a flange 264. The flange 264 is connected to the edge of the main bracket body 261 and is located on the side of the main bracket body 261 facing away from the transceiver board 213. The flange 264 can optimize the center of mass of the entire optical assembly 20 at the center of rotation, optimizing the dynamic balance.

The flange 264 is located between two adjacent mounting seats 262 and is spaced apart from the mounting seats 262.

Due to structural and hardware constraints, the mounting seats 262 are typically arranged at the peripheral region of the transceiver board 213, while the transmitter chip 211 and receiver chip 212 are typically arranged in the central area of the transceiver board 213. Since the transceiver board 213 is integrated, the overall warpage of the transceiver board 213 may increase, causing the relative positional error between the transmitter chip 211, receiver chip 212, and the lenses to increase. Based on this, in order to improve the warpage of the central portion of the transceiver board 213, the central portion of the optical assembly bracket 26 (e.g., the main bracket body 261) protrudes toward the transceiver board 213 to form a raised portion 265. The raised portion 265 abuts the transceiver board 213. The raised portion 265 can support the central portion of the transceiver board 213, thereby improving the warpage of the central portion of the transceiver board 213.

The optical assembly bracket 26 further has a relief portion 266. The relief portion 266 may be located at the edge of the optical assembly bracket 26 (e.g., the main bracket body 261).

The optical assembly 20 further comprises a fixing block 27. The flexible board 214 bends on the side of the optical assembly bracket 26 facing away from the transceiver board 213 to form a bent portion 2141. The bent portion 2141 is connected to the optical assembly bracket 26, and the fixing block 27 is located within the bending region of the bent portion 2141 and is connected to the flexible board 214. Through the dual constraining action of the fixing block 27 and the optical assembly bracket 26, the flexible board 214 is secured, preventing the flexible board 214 from causing structural interference due to deformation during operation of the LiDAR 1.

Both opposing sides of the fixing block 27 may be connected to the flexible board 214, without limitation. The fixing block 27 may be connected to the flexible board 214 by bonding or other means, without limitation.

The fixing block 27 has a certain degree of elasticity. In this way, when the optical assembly 20 is installed within the LiDAR 1, the fixing block 27 can deform to accommodate the space margin within the LiDAR 1, providing a better securing effect. The fixing block 27 may be made of foam.

The lens barrel 25 is provided with a partition 259. The partition 259 is connected to the lens barrel 25 and extends toward the transceiver board 213. The lens barrel 25 forms a transmitting chamber 257 and a receiving chamber 258 on opposite sides of the partition 259. The transmitting chamber 257 communicates with the transmitting light-passing aperture 251, and the transmitter chip 211 is located within the transmitting chamber 257. The receiving chamber 258 communicates with the receiving light-passing aperture 252, and the receiver chip 212 is located within the receiving chamber 258. The transceiver board 213 covers the transmitting chamber 257 and the receiving chamber 258.

A communication opening 250 communicating with the transmitting chamber 257 and/or the receiving chamber 258 is formed on the side wall of the lens barrel 25. The provision of the communication opening 250 allows airflow to enter the lens barrel 25 through the communication opening 250 when the optical assembly 20 rotates relative to the base 10, enabling heat generated by the transmitter chip 211, receiver chip 212, and other heat-generating components on the transceiver board 213 to be transferred out through convection.

A gap is present between the partition 259 and the transceiver board 213, which communicates with both the transmitting chamber 257 and the receiving chamber 258. In this way, regardless of whether the communication opening 250 communicates with the transmitting chamber 257 or the receiving chamber 258, airflow entering the lens barrel 25 through the communication opening 250 can reach the vicinity of both the transmitter chip 211 and the receiver chip 212, carrying away the heat near them.

One or multiple communication openings 250 may be provided at intervals.

In the embodiments of the present application, one communication opening 250 is provided, allowing airflow to enter the lens barrel 25 through the communication opening 250 and exit from the same communication opening 250, enhancing vortex flow and improving convective heat transfer.

In the embodiments of the present application, the communication opening 250 is provided on the side of the receiving chamber 258 and communicates with the receiving chamber 258. As analyzed above, since the transmitting chamber 257 and the receiving chamber 258 are connected via the gap, the communication opening 250 communicating with the receiving chamber 258 also allows airflow entering the lens barrel 25 through the communication opening 250 to reach the transmitting chamber 257, carrying away the heat near both the transmitter chip 211 and the receiver chip 212.

It should be noted that the location of the communication opening 250 can be determined by simulation. For example, through stray light simulation near the lens barrel 25, the location on the lens barrel 25 where stray light is almost absent is determined, and the communication opening 250 is placed at that location. Through simulation analysis, the side of the receiving chamber 258 far from the transmitting chamber 257 has almost no stray light, so the communication opening 250 is arranged on the side of the receiving chamber 258 far from the transmitting chamber 257, preventing stray light from entering the lens barrel 25 through the communication opening 250.

It is understood that the communication opening 250 can also be provided on the transceiver board 213, not only on the lens barrel 25. If there is sufficient area on the surface of the transceiver board 213, holes can be drilled in the transceiver board 213 to form the communication opening 250, without limitation. In the embodiments of the present application, placing the communication opening 250 on the lens barrel 25 rather than on the transceiver board 213 facilitates the arrangement of circuit structures on the transceiver board 213.

It should be noted that the gap between the partition 259 and the transceiver board 213 described above may mean that part of the surface of the partition 259 adjacent to the transceiver board 213 has a gap with the transceiver board 213, while the remaining part of the surface of the partition 259 adjacent to the transceiver board 213 may abut the transceiver board 213. In this way, the portion of the partition 259 abutting the transceiver board 213 can improve the warpage of the central portion of the transceiver board 213.

Combined with the above analysis that the raised portion 265 also abuts the central portion of the transceiver board 213, the raised portion 265 and the partition 259 can support and press against the transceiver board 213 from opposite sides of the transceiver board 213 respectively, better improving the warpage of the central portion of the transceiver board 213.

The portion of the partition 259 abutting the transceiver board 213 may correspond to the portion of the raised portion 265 abutting the transceiver board 213.

The assembly steps of the optical assembly 20 according to the embodiments of the present application include: Step 1, disposing thermally conductive gel 28 between the transceiver board 213 and the optical assembly bracket 26. Step 2, fastening the transceiver board 213 and the optical assembly bracket 26 to the lens barrel 25 using fasteners. Step 3, bending part of the flexible board 214 and securing the bent portion 2141 via the fixing block 27. Step 4, electrically connecting the flexible board 214 to the transceiver board 213 and securing it to the side of the optical assembly bracket 26 facing away from the transceiver board 213.

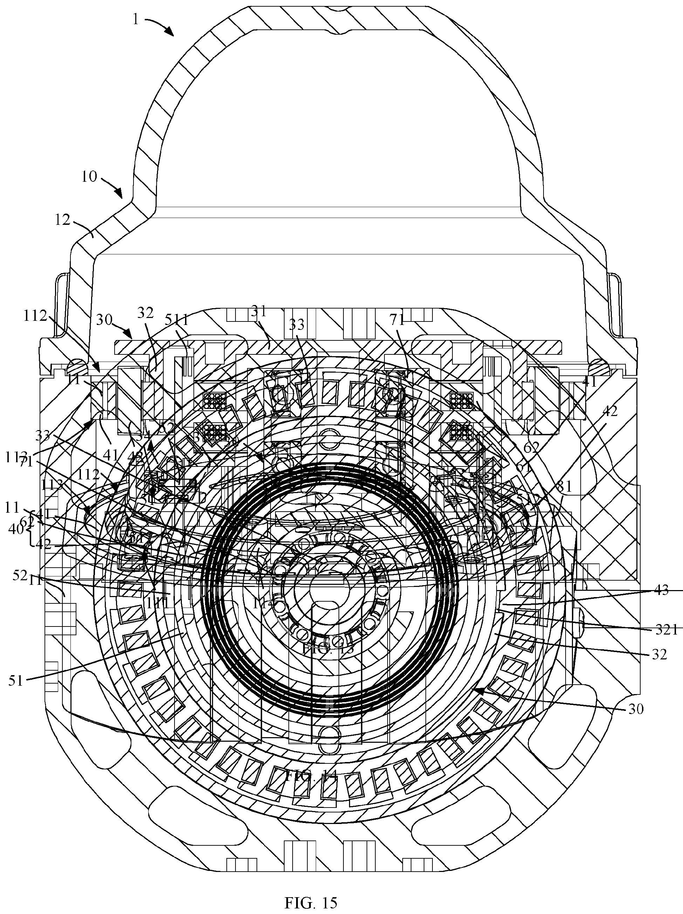

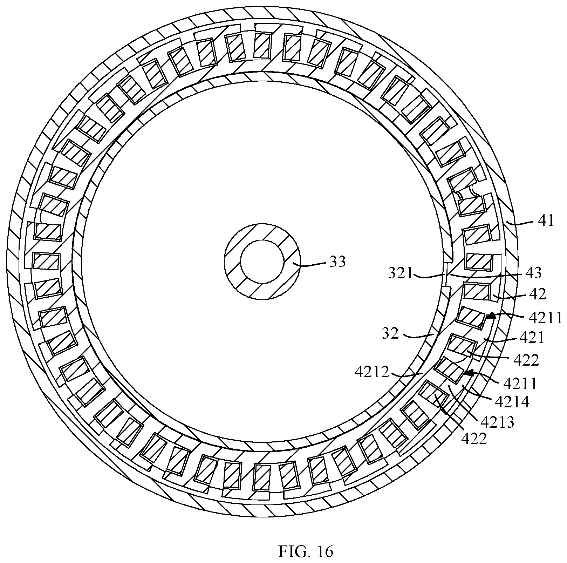

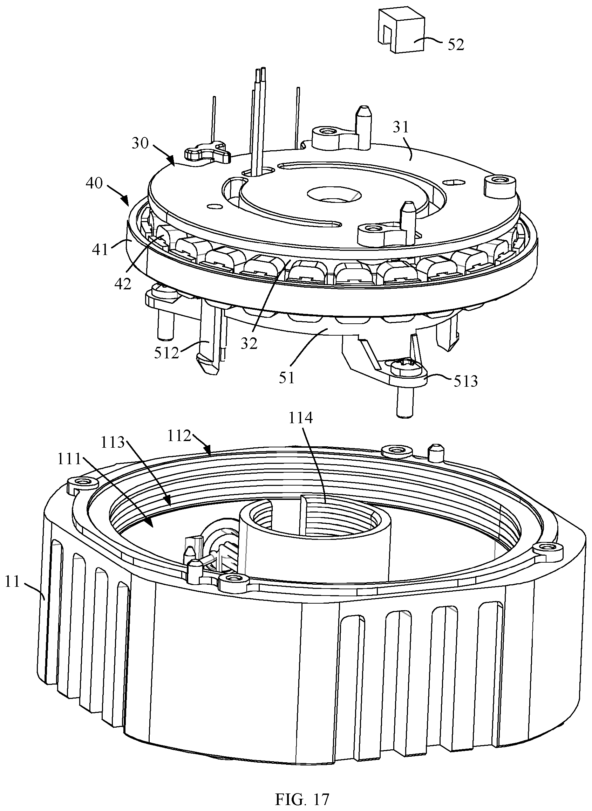

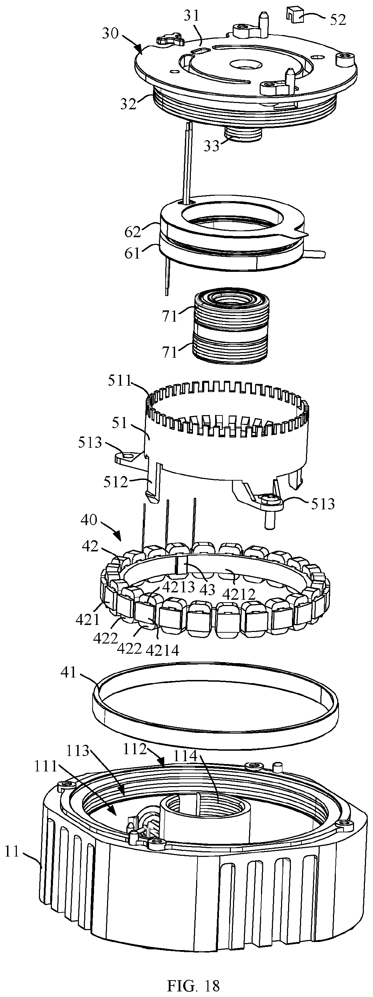

Reference will now be made to FIGS. 13 through 18 for a detailed description of the heat-dissipating bracket 30.

The heat-dissipating bracket 30 is disposed within the housing 10, and the optical assembly 20 is mounted on the heat-dissipating bracket 30. The heat-dissipating bracket 30 can be used to support the optical assembly 20 and the main circuit board 82, and to improve the heat dissipation efficiency during operation of the optical assembly 20.

The main circuit board 82 is disposed within the housing 10 and is mounted between the optical assembly 20 and the heat-dissipating bracket 30. The optical assembly 20 is mounted on the heat-dissipating bracket 30.

The main circuit board 82 is disposed adjacent to the heat-dissipating bracket 30, so that the heat-dissipating bracket 30 can improve the heat dissipation efficiency of the main circuit board 82 during operation of the optical assembly 20, ensuring the operational performance and service life of the main circuit board 82.

The main circuit board 82 is located between the optical assembly 20 and the heat-dissipating bracket 30, so that when the optical assembly 20 and the heat-dissipating bracket 30 are assembled and secured together, the main circuit board 82 can be clamped, eliminating the need for a separate mounting step for the main circuit board 82 and reducing assembly costs.

A thermally conductive gel is provided between the main circuit board 82 and the heat-dissipating bracket 30. The thermally conductive gel can improve the heat transfer efficiency between the main circuit board 82 and the heat-dissipating bracket 30.

In some embodiments, the optical assembly 20 and the heat-dissipating bracket 30 may be assembled and secured by fasteners. Specifically, the optical assembly 20 is formed with a first mounting hole, the heat-dissipating bracket 30 is formed with a second mounting hole, and a fastener passes through the first mounting hole and the second mounting hole to secure the optical assembly 20 to the heat-dissipating bracket 30. The fastener may comprise a bolt, or may comprise a bolt and a nut used in combination with the bolt, without limitation.

In some embodiments, the fastener may secure the optical assembly 20 to the heat-dissipating bracket 30 while avoiding the main circuit board 82. In other embodiments, the fastener may pass through a third mounting hole in the main circuit board 82 to secure the optical assembly 20 to the heat-dissipating bracket 30.

The optical assembly 20 being mounted on the heat-dissipating bracket 30 may specifically mean that the lens barrel 25 is mounted on the heat-dissipating bracket 30. Specifically, the lens barrel 25 may be mounted on the heat-dissipating bracket 30 via the fasteners described above, which will not be repeated here.

The heat-dissipating bracket 30 comprises a first main bracket 31 and a side bracket 32. The side bracket 32 is connected to the first main bracket 31 and extends in a direction away from the first main bracket 31. The optical assembly 20 is mounted on the first main bracket 31.

The first main bracket 31 may have a generally plate-like shape. The first main bracket 31 may be disposed opposite to the main circuit board 82 to provide a larger bearing area.

The side bracket 32 is located on the side of the optical assembly 20 facing away from the first main bracket 31.

The side bracket 32 is disposed around the rotation axis of the optical assembly 20.

The heat-dissipating bracket 30 (e.g., the side bracket 32) defines a positioning portion 321.

The heat-dissipating bracket 30 further comprises a rotation shaft 33. The rotation shaft 33 is connected to the first main bracket 31 and extends in a direction away from the first main bracket 31. At least a portion of the rotation shaft 33 extends into the sleeve 114 within the base 11, achieving assembly positioning between the heat-dissipating bracket 30 and the base 11. The rotation axis of the heat-dissipating bracket 30 relative to the base 11 under the drive of the driving member 40 may be along the central axis of the rotation shaft 33.

When the heat-dissipating bracket 30 rotates relative to the base 11, the rotation shaft 33 rotates within the sleeve 114. A bearing 71 may be provided between the rotation shaft 33 and the sleeve 114. The inner ring of the bearing 71 is fixedly fitted on the rotation shaft 33, and the outer ring of the bearing 71 is fixedly embedded in the sleeve 114, ensuring smooth rotation between the rotation shaft 33 and the sleeve 114.

In some embodiments, one or more bearings 71 may be provided between the rotation shaft 33 and the sleeve 114 along the central axis direction of the rotation shaft 33, without limitation.

The bearing 71 may be directly bonded and secured between the sleeve 114 and the rotation shaft 33, saving bracket components.

The rotation shaft 33 and the side bracket 32 are located on the same side of the first main bracket 31. For example, both the rotation shaft 33 and the side bracket 32 are located on the side of the first main bracket 31 near the inner bottom wall of the base 11.

The rotation shaft 33 may generally correspond to the middle portion of the first main bracket 31, and the side bracket 32 may generally correspond to the edge portion of the first main bracket 31. The side bracket 32 may be arranged around the periphery of the rotation shaft 33.

The rotation shaft 33 may be hollow inside, reducing the manufacturing cost of the LiDAR 1.

Reference will now be made to FIGS. 13 through 18 for a detailed description of the driving member 40.

The driving member 40 comprises a magnetic member 41 and an electromagnetic winding 42. The magnetic member 41 and the electromagnetic winding 42 cooperate to drive the heat-dissipating bracket 30 to rotate relative to the base 11, thereby enabling the optical assembly 20 to rotate relative to the base 11. Specifically, the electromagnetic winding 42 may be periodically energized to change the magnetic field around the electromagnetic winding 42, thereby driving the heat-dissipating bracket 30 to rotate relative to the base 11. For example, the magnetic member 41 generates a constant magnetic field; when the direction and/or magnitude of current in the coils of the electromagnetic winding 42 changes, a varying magnetic field is generated around the electromagnetic winding 42, and this varying magnetic field interacts with the constant magnetic field, driving relative movement between the electromagnetic winding 42 and the magnetic member 41, and thus driving relative movement between the heat-dissipating bracket 30 and the base 11.

The magnetic member 41 is mounted on one of the base 11 and the heat-dissipating bracket 30, and the electromagnetic winding 42 is mounted on the other one of the base 11 and the heat-dissipating bracket 30. By directly mounting the magnetic member 41 on one of the base 11 and the heat-dissipating bracket 30, and the electromagnetic winding 42 directly on the other one, compared to the related art in which the magnetic member and the electromagnetic winding are each mounted on the base and the optical assembly via separate brackets, the bracket structure can be omitted, reducing the manufacturing cost of the LiDAR 1. Moreover, both the optical assembly 20 and the magnetic member 41/electromagnetic winding 42 are mounted on the heat-dissipating bracket 30, enabling the heat-dissipating bracket 30 to both improve the heat dissipation efficiency during operation of the optical assembly 20 and serve as a mounting carrier for the magnetic member 41/electromagnetic winding 42; that is, the heat-dissipating bracket 30 is reused in the embodiments of the present application, reducing the manufacturing cost of the LiDAR 1.

In summary, the one of the magnetic member 41 and the electromagnetic winding 42 that is mounted on the base 11 is directly mounted on the base 11, eliminating one mounting bracket; the one of the magnetic member 41 and the electromagnetic winding 42 that is mounted on the heat-dissipating bracket 30 is directly mounted by reusing the heat-dissipating bracket 30 of the optical assembly 20, also eliminating one mounting bracket. Accordingly, the manufacturing cost of the LiDAR 1 can be significantly reduced.

The one of the magnetic member 41 and the electromagnetic winding 42 mounted on the base 11 may be seated on the step surface of the step 113 on the base 11. In this way, when mounting the one of the magnetic member 41 and the electromagnetic winding 42 on the housing 10, it can be placed into the step 113 from the opening 112 of the base 11 and seated on the step surface of the step 113. The installation method is simple, and the process of forming the step 113 on the housing 10 is mature and easy to manufacture.

The bottom wall of the one of the magnetic member 41 and the electromagnetic winding 42 may be entirely seated on the step surface, or may be partially seated on the step surface. For example, the outer peripheral portion of the bottom wall of the one of the magnetic member 41 and the electromagnetic winding 42 is seated on the step surface, while the inner peripheral portion is suspended.

The other one of the magnetic member 41 and the electromagnetic winding 42 mounted on the heat-dissipating bracket 30 may be mounted on the side bracket 32. The side bracket 32 is located on the side of the optical assembly 20 facing away from the first main bracket 31. In this way, the optical assembly 20 and the magnetic member 41/electromagnetic winding 42 mounted on the side bracket 32 are located on opposite sides of the first main bracket 31, respectively, without interfering with each other, achieving an optimized spatial layout within the LiDAR 1. The side bracket 32 is disposed around the rotation axis of the optical assembly 20, giving the side bracket 32 a generally tubular structure, which, compared to a block structure, can provide a larger mounting area for the magnetic member 41/electromagnetic winding 42.

The side bracket 32 defines a positioning portion 321. The one of the magnetic member 41 and the electromagnetic winding 42 that is fixed relative to the heat-dissipating bracket 30 is provided with a positioning mating portion 43. The positioning portion 321 is connected to the positioning mating portion 43. The provision of the positioning portion 321 and the positioning mating portion 43 facilitates the positioning of the installation of the heat-dissipating bracket 30 and the magnetic member 41/electromagnetic winding 42, improving the installation accuracy of the magnetic member 41/electromagnetic winding 42 on the heat-dissipating bracket 30.

In some embodiments, one of the positioning portion 321 and the positioning mating portion 43 is a positioning groove, and the other is a positioning protrusion, with at least a portion of the positioning protrusion extending into the positioning groove. The forming and assembly of the positioning protrusion and the positioning groove are relatively convenient.

In some embodiments, the positioning portion 321 is a positioning groove and the positioning mating portion 43 is a positioning protrusion, i.e., the heat-dissipating bracket 30 is provided with a positioning groove and the magnetic member 41/electromagnetic winding 42 is provided with a positioning protrusion. In other embodiments, the positioning portion 321 is a positioning protrusion and the positioning mating portion 43 is a positioning groove, i.e., the heat-dissipating bracket 30 is provided with a positioning protrusion and the magnetic member 41/electromagnetic winding 42 is provided with a positioning groove.

The magnetic member 41 is disposed around the rotation axis of the optical assembly 20, and the electromagnetic winding 42 is disposed around the rotation axis of the optical assembly 20. That is, the magnetic member 41 is an annular member and the electromagnetic winding 42 is an annular member. Annular members are more convenient to assemble than multiple independent block-shaped members.

If the magnetic member 41 is disposed around the rotation axis of the optical assembly 20, the electromagnetic winding 42 is disposed around the rotation axis, and the step 113 and the side bracket 32 are also disposed around the rotation axis. In this way, the step 113 is an annular step with an annular step surface for supporting the annular magnetic member 41/electromagnetic winding 42. The side bracket 32 has a generally tubular structure, allowing the magnetic member 41/electromagnetic winding 42 to be fitted over the side bracket 32 and connected to the side bracket 32 in an interference fit, without limitation.

The above-described configuration in which the magnetic member 41 is mounted on one of the base 11 and the heat-dissipating bracket 30 and the electromagnetic winding 42 is mounted on the other may mean: the magnetic member 41 is mounted on the base 11 and the electromagnetic winding 42 is mounted on the heat-dissipating bracket 30; or: the magnetic member 41 is mounted on the heat-dissipating bracket 30 and the electromagnetic winding 42 is mounted on the base 11.

In the embodiments of the present application, the magnetic member 41 is mounted on the base 11 and the electromagnetic winding 42 is mounted on the heat-dissipating bracket 30. That is, during operation of the LiDAR 1, the magnetic member 41 remains stationary relative to the base 11, while the electromagnetic winding 42 rotates relative to the base 11 together with the heat-dissipating bracket 30.

When the electromagnetic winding 42 is mounted on the heat-dissipating bracket 30, the electromagnetic winding 42 is electrically connected to the main circuit board 82. Since both the electromagnetic winding 42 and the optical assembly 20 are mounted on the heat-dissipating bracket 30, during operation of the LiDAR 1, the electromagnetic winding 42 and the optical assembly 20 can rotate synchronously relative to the base 11, remaining relatively stationary with each other. In this way, designing the electromagnetic winding 42 to be electrically connected to the main circuit board 82 can avoid wiring problems during rotation.

Furthermore, connecting the electromagnetic winding 42 to the main circuit board 82 eliminates the need for a separate circuit board for the electromagnetic winding's electrical connection, saving a circuit board and reducing the manufacturing cost of the LiDAR 1.

The electromagnetic winding 42 comprises an iron core 421 and a plurality of coils 422. The iron core 421 has a plurality of mounting positions 4211 circumferentially spaced apart. The coils 422 are wound one-to-one correspondingly on the mounting positions 4211. The plurality of mounting positions 4211 on the iron core 421 are equally spaced, so that the magnetic forces generated by the interaction between the electromagnetic winding 42 and the magnetic member 41 are approximately balanced at each portion.

The above-described configuration in which the electromagnetic winding 42 is disposed around the rotation axis of the optical assembly 20 may mean that the iron core 421 is disposed around the rotation axis, with the plurality of mounting positions 4211 circumferentially spaced around the rotation axis.

The iron core 421 comprises a yoke portion 4212 of the stator iron core and a plurality of tooth portions 4213 of the stator iron core. The yoke portion 4212 of the stator iron core is for mounting on the heat-dissipating bracket 30 or the base 11. The plurality of tooth portions 4213 of the stator iron core are distributed at circumferential intervals along the yoke portion 4212 of the stator iron core. One end of each tooth portion 4213 of the stator iron core is connected to the yoke portion 4212 of the stator iron core, and the other end extends in a direction away from the yoke portion 4212. The outer periphery of each tooth portion 4213 of the stator iron core forms a mounting position 4211, and the coils 422 are wound one-to-one correspondingly on the tooth portions 4213 of the stator iron core. By reasonably increasing the number of teeth of the stator iron core, the height of the coils 422 can be reduced, and the cogging torque order can be increased due to the increased number of stator iron core teeth, thereby reducing the cogging torque and improving the stability of the point cloud.

If the iron core 421 is disposed around the rotation axis of the optical assembly 20, the tooth portions 4213 of the stator iron core may be located on the inner side or the outer side of the iron core 421. If the electromagnetic winding 42 is mounted on the heat-dissipating bracket 30, the tooth portions 4213 of the stator iron core are located on the outer side of the iron core 421, so that the iron core 421 can be connected to the heat-dissipating bracket 30 via the yoke portion 4212 of the stator iron core, providing a larger connection area and a more reliable connection.

If the electromagnetic winding 42 is mounted on the heat-dissipating bracket 30, the yoke portion 4212 of the stator iron core of the electromagnetic winding 42 is fitted over the side bracket 32 of the heat-dissipating bracket 30 and mounted on the side bracket 32. The yoke portion 4212 of the stator iron core and the side bracket 32 may be connected by interference fit or other means, without limitation. The yoke portion 4212 of the stator iron core may be provided with the positioning mating portion 43, and the side bracket 32 may be provided with the positioning portion 321.

The iron core 421 further comprises tooth tips 4214 of the stator iron core. The tooth tips 4214 of the stator iron core are connected to the side of the tooth portions 4213 of the stator iron core facing away from the yoke portion 4212 of the stator iron core, and protrude from the tooth portions 4213 of the stator iron core in the circumferential direction of the yoke portion 4212. The tooth tips 4214 of the stator iron core constrain the coils 422 wound on the tooth portions 4213 of the stator iron core, preventing the coils 422 from falling off the tooth portions 4213.

Reference will now be made to FIGS. 13 through 18 for a detailed description of the LiDAR 1.

The LiDAR 1 further comprises a power board 81. The power board 81 is disposed within the housing 10 and is used to supply power to the electrical components within the LiDAR 1. The electrical components include the optical assembly 20, the main circuit board 82, the electromagnetic winding 42, etc.

The power board 81 is fixed relative to the base 11, i.e., during operation of the LiDAR 1, the power board 81 remains stationary together with the base 11.

The power board 81 and the main circuit board 82 are located on opposite sides of the heat-dissipating bracket 30. This can increase the distance between the power board 81 and the main circuit board 82, which is conducive to improving the heat dissipation performance of the LiDAR 1.

The LiDAR 1 further comprises a wireless charging module disposed within the housing 10. The wireless charging module comprises a wireless charging transmitter unit 61 and a wireless charging receiver unit 62. The wireless charging transmitter unit 61 is fixed relative to the base 11 and is electrically connected to the power board 81. The wireless charging receiver unit 62 is fixed relative to the heat-dissipating bracket 30 and is electrically connected to the main circuit board 82. In this way, the power board 81 can wirelessly transmit electrical signals to the main circuit board 82 via the wireless charging transmitter unit 61 and the wireless charging receiver unit 62, without wired electrical connections, thereby avoiding wiring problems during rotation of the main circuit board 82 relative to the base 11.

In some embodiments, the wireless charging transmitter unit 61 and the wireless charging receiver unit 62 are disposed opposite to each other in the height direction of the LiDAR 1. This facilitates compressing the dimensions of the LiDAR 1 in the height direction.

In some embodiments, the wireless charging transmitter unit 61 and the wireless charging receiver unit 62 are located between the code disc 51 (described further below) and the sleeve 114 of the base 11. This facilitates compressing the dimensions of the LiDAR 1 in the height direction.

In some embodiments, the wireless charging transmitter unit 61 is mounted on the code disc 51 (where the code disc 51 is fixed relative to the base 11, as described further below), and the wireless charging receiver unit 62 is mounted on the heat-dissipating bracket 30. The wireless charging transmitter unit 61 may be mounted on the code disc 51 by bonding or other means. The wireless charging receiver unit 62 may be mounted on the heat-dissipating bracket 30 by bonding or other means.

The provision of the wireless charging module can further reduce the overall power consumption, prevent the internal temperature of the device from becoming excessively high, further reduce the temperature of the optical assembly 20, and improve the feasibility of plasticizing the lens barrel.

The charging magnetic ring of the wireless charging module is made of injection-molded ferrite material, avoiding the use of sintered ferrite processes that have low production efficiency, low yield, and poor precision, thereby further reducing costs.

The LiDAR 1 further comprises a code disc 51 and a photoelectric switch 52. The code disc 51 is fixed relative to one of the base 11 and the heat-dissipating bracket 30. The code disc 51 is provided with a plurality of detection portions 511 arranged circumferentially. The photoelectric switch 52 is fixed relative to the other one of the base 11 and the heat-dissipating bracket 30. When the heat-dissipating bracket 30 rotates relative to the base 11, the photoelectric switch 52 sequentially corresponds to the plurality of detection portions 511. The code disc 51 and the photoelectric switch 52 can cooperate for angular displacement measurement, counting, positioning, etc., without limitation.

In some embodiments, the photoelectric switch 52 may comprise a transmitting portion and a receiving portion spaced apart. The photoelectric switch 52 sequentially corresponding to the plurality of detection portions 511 means that the detection portions 511 sequentially pass between the transmitting portion and the receiving portion of the photoelectric switch 52. When a detection portion 511 corresponds to the position between the transmitting portion and the receiving portion, the light emitted by the transmitting portion cannot be received by the receiving portion. When the gap between two adjacent detection portions 511 corresponds to the position between the transmitting portion and the receiving portion, the light emitted by the transmitting portion is not blocked by the detection portions 511 and can be received by the receiving portion. Based on this, the photoelectric switch 52 can count the number of detection portions 511 on the code disc 51 that have passed between the transmitting portion and the receiving portion within a period of time, and thereby determine the angle through which the code disc 51 has rotated, achieving angular displacement measurement. For example, when the included angle between the lines connecting the centers of each two adjacent detection portions 511 on the code disc 51 to the rotation center of the code disc 51 is 1°, if the photoelectric switch 52 counts two detection portions 511 on the code disc 51 passing between the transmitting portion and the receiving portion in one minute, then the angle through which the code disc 51 has rotated is approximately greater than 1° and less than 3°. By increasing the number of detection portions 511 on the code disc 51 and reducing the angle between adjacent detection portions 511, the detection accuracy of the photoelectric switch 52 can be improved.

The above-described configuration in which the code disc 51 is fixed relative to one of the base 11 and the heat-dissipating bracket 30 and the photoelectric switch 52 is fixed relative to the other may mean: the code disc 51 is fixed relative to the base 11 and the photoelectric switch 52 is fixed relative to the heat-dissipating bracket 30; or: the code disc 51 is fixed relative to the heat-dissipating bracket 30 and the photoelectric switch 52 is fixed relative to the base 11.

In the embodiments of the present application, the code disc 51 is fixed relative to the base 11 and the photoelectric switch 52 is fixed relative to the heat-dissipating bracket 30. That is, during operation of the LiDAR 1, the code disc 51 remains stationary relative to the base 11, while the photoelectric switch 52 rotates relative to the base 11 together with the heat-dissipating bracket 30.

When the code disc 51 is fixed relative to the base 11, the code disc 51 may be provided with a fixing seat 513, and the inner bottom wall of the base 11 may be provided with a fixing protrusion. The fixing seat 513 and the fixing protrusion may be secured by fasteners. Securing the code disc 51 by providing a fixing protrusion on the inner bottom wall of the base 11 avoids drilling holes in the base 11, ensuring the sealing integrity and structural strength of the housing 10. Specifically, the code disc 51 is formed with a fourth mounting hole, and the fixing protrusion of the base 11 is formed with a fifth mounting hole. A fastener passes through the fourth mounting hole and the fifth mounting hole to secure the code disc 51 to the base 11. The fastener may comprise a bolt, and the fifth mounting hole on the fixing protrusion may be provided with internal threads for threaded engagement with the bolt.

When the photoelectric switch 52 is fixed relative to the heat-dissipating bracket 30, the photoelectric switch 52 is electrically connected to the main circuit board 82. Compared to providing a separate circuit board for the photoelectric switch's electrical connection, this saves a circuit board and reduces the manufacturing cost of the LiDAR 1.

The code disc 51 is located on the side of the heat-dissipating bracket 30 near the inner bottom wall of the base 11. The heat-dissipating bracket 30 may be provided with a through hole 34, and the photoelectric switch 52 passes through the through hole 34 to be electrically connected to the main circuit board 82 and to correspond to the detection portions 511 on the code disc 51.

The power board 81 is located between the code disc 51 and the inner bottom wall of the base 11. This allows the code disc 51 and the base 11 to be assembled and secured together while clamping the power board 81, eliminating the need for a separate mounting step for the power board 81 and reducing assembly costs.

In some embodiments, the fastener connecting the code disc 51 and the base 11 may secure the code disc 51 to the base 11 while avoiding the power board 81. In other embodiments, the fastener connecting the code disc 51 and the base 11 may pass through a sixth mounting hole in the power board 81 to secure the code disc 51 to the base 11.

The code disc 51 is provided with a limit hook 512. The limit hook 512 hooks onto the power board 81. In this way, while securing the power board 81, the code disc 51 can also be pressed, reducing the use of fasteners and lowering costs.

In the related art, a LiDAR comprises an optical transceiver assembly and a circuit board. The optical transceiver assembly processes emitted and reflected laser light through lenses. The circuit board is provided with a transmitter chip and a receiver chip that can emit and receive laser light and perform processing operations. The various components of the LiDAR are generally manufactured separately and assembled at a later stage. In the prior art, the receiver chip is first packaged and protected using protective glass and a ceramic substrate, and the ceramic substrate is then soldered onto a circuit board, resulting in an increased overall size of the packaging structure and higher costs.

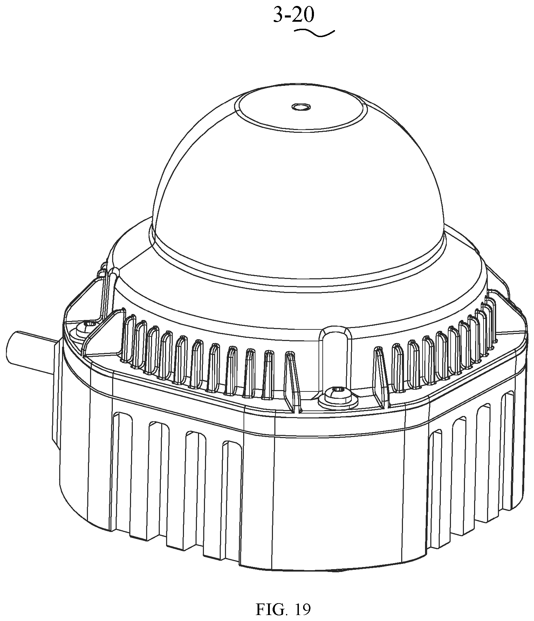

To address the above problems, referring to FIGS. 19 through 21, the present application proposes a LiDAR 3-20. In the chip packaging structure 3-10 of this LiDAR 3-20, the receiver chip 3-200 is directly packaged on the circuit board 3-100 without requiring protective glass and a ceramic substrate, saving costs and reducing the structural dimensions of the structure packaging the receiver chip 3-200.

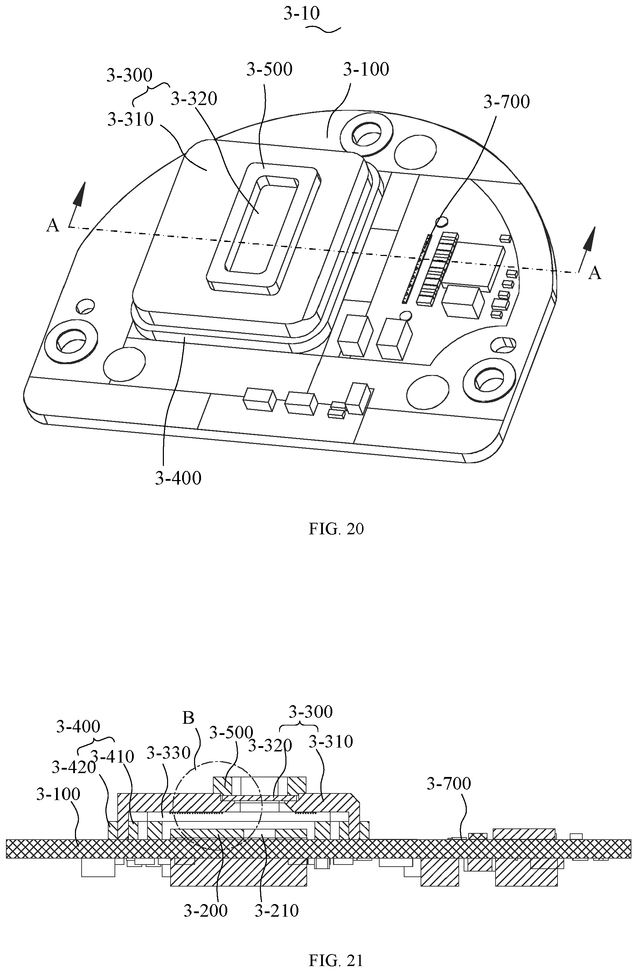

Referring to FIGS. 20 and 21, the chip packaging structure 3-10 proposed in the present application comprises a circuit board 3-100, a receiver chip 3-200, a filter assembly 3-300, and a first adhesive 3-400. The receiver chip 3-200 is mounted on the circuit board 3-100. The filter assembly 3-300 comprises a bracket 3-310 and a filter 3-320. The bracket 3-310 is disposed over the receiver chip 3-200. The filter 3-320 is mounted on the bracket 3-310 and is disposed opposite to the receiver chip 3-200. The bracket 3-310 is bonded to the circuit board 3-100 via the first adhesive 3-400, and the first adhesive 3-400 surrounds the periphery of the receiver chip 3-200 so that the filter assembly 3-300 and the circuit board 3-100 define a sealed receiving cavity 3-330.

The filter 3-320 is primarily used to screen and isolate laser signals of specific wavelengths, ensuring accurate detection by the LiDAR 3-20 in complex environments. Its core function is to use ultra-narrowband thin-film interference technology to allow only echo light consistent with the wavelength of the detection light (formed by reflection of detection light from the target object) to enter the receiver chip 3-200, while deeply cutting off ambient light of other wavelengths (such as interference sources like sunlight and car lights), significantly improving the signal-to-noise ratio and ensuring stable operation of the LiDAR 3-20 under adverse conditions such as rain, snow, and backlight. By packaging the filter 3-320 and the receiver chip 3-200 together, the filter 3-320 can filter the echo light ultimately transmitted to the receiver chip 3-200, improving the accuracy and precision of the final measurement results of the LiDAR 3-20.

The circuit board 3-100 is an independent functional module composed of a printed circuit board, electronic components, and interfaces, used to expand or implement specific functions. Its core structure includes a substrate as a carrier, main control chip, memory, sensors, and other core components. Specifically, the circuit board 3-100 is provided with a driving circuit for driving the LiDAR 3-20 to emit detection light, a receiving circuit for controlling the LiDAR 3-20 to receive echo light, and a data processing circuit for processing the received signals to obtain the final detection results.

By bonding the bracket 3-310 and the circuit board 3-100 via the first adhesive 3-400, the filter assembly 3-300 and the circuit board 3-100 define a sealed receiving cavity 3-330. The receiver chip 3-200 is mounted on the circuit board 3-100 and is isolated within the receiving cavity 3-330, thereby isolating external contaminants and moisture, preventing corrosion of the optical interface of the receiver chip 3-200 or device failure, and ensuring the long-term stability of the receiver chip 3-200 under complex operating conditions. The filter assembly 3-300 includes the filter 3-320, through which echo light can enter the receiving cavity 3-330 and be received by the receiver chip 3-200, ensuring the normal function of the receiver chip 3-200 and improving the accuracy and precision of the final measurement results of the LiDAR 3-20. The receiver chip 3-200 is mounted on the circuit board 3-100, shortening the heat transfer path and improving heat dissipation performance. The overall structure of the chip packaging structure 3-10 is simple, which can effectively reduce the packaging cost and reduce the volume and weight of the structure packaging the receiver chip 3-200, facilitating a reduction in the overall volume and weight of the LiDAR 3-20.

Specifically, the first adhesive 3-400 comprises an inner ring adhesive 3-410 and an outer ring adhesive 3-420. The inner ring adhesive 3-410 bonds the inner peripheral wall surface of the bracket 3-310 to the circuit board 3-100. The outer ring adhesive 3-420 bonds the outer peripheral wall surface of the bracket 3-310 to the circuit board 3-100. The inner ring adhesive 3-410 and the outer ring adhesive 3-420 can be applied by dispensing in separate steps on the inner and outer peripheral wall surfaces of the circuit board 3-100. The first adhesive 3-400 can first be applied on the circuit board 3-100, and then by pressing the bracket 3-310 toward the circuit board 3-100, the first adhesive 3-400 is squeezed by the bracket 3-310 to form the inner ring adhesive 3-410 on the inner side of the bracket 3-310 and the outer ring adhesive 3-420 on the outer side of the bracket 3-310. By providing the inner ring adhesive 3-410 and the outer ring adhesive 3-420 on the inner and outer sides of the bracket 3-310 respectively, a double-ring bonding structure is formed, enhancing the mechanical coupling between the bracket 3-310 and the circuit board 3-100, distributing shear stress caused by external vibration or thermal deformation, reducing the risk of cracking of a single ring of adhesive, and improving the reliability of the connection between the bracket 3-310 and the circuit board 3-100, ensuring the service life of the chip packaging structure 3-10.

It should be noted that the material of the bracket needs to have a high elastic modulus and a high coefficient of linear thermal expansion to ensure the rigidity of the bracket, suppressing plastic deformation of the bracket during fastening, and to ensure the thermal expansion characteristics of the bracket, suppressing plastic deformation of the bracket under thermal stress during subsequent operation of the receiver chip, reducing the risk of displacement deviation of the chip packaging structure due to mechanical loads or temperature fluctuations, and ensuring the reliability of the bonding between the bracket and the circuit board. The thermal expansion characteristics of the first adhesive and the bracket are similar, so that the thermal deformation difference between the bracket and the first adhesive is minimized, reducing problems such as delamination or crack propagation at the bonding interface between the bracket and the first adhesive due to accumulated shear stress. At the same time, the material of the bracket also needs to have a high thermal conductivity to accelerate heat transfer generated during the operation of the receiver chip, reduce local temperature gradient, and prevent non-uniform expansion of the bracket and the first adhesive due to uneven temperature distribution, thereby extending the service life of the chip packaging structure in high-temperature, high-power scenarios. Specifically, through mechanical simulations such as fastening deformation simulation and thermal deformation simulation, in some embodiments, the material properties of the bracket satisfy: elastic modulus greater than 50,000 MPa, coefficient of linear thermal expansion greater than 15×10⁻⁶/K, and thermal conductivity greater than 80 W/(m·K). Optionally, the material of the bracket is copper, aluminum, nickel-copper alloy, or the like.

Continuing to refer to FIGS. 20 and 21, in one embodiment, the LiDAR 3-20 further comprises a second adhesive 3-500. The second adhesive 3-500 bonds the bracket 3-310 to the filter 3-320, and is located on the side of the filter 3-320 facing away from the receiver chip 3-200. Taking the side of the filter 3-320 facing away from the receiver chip 3-200 as the upper surface of the filter 3-320, and the side of the bracket 3-310 facing away from the receiver chip 3-200 as the upper surface of the bracket 3-310, the second adhesive 3-500 is applied on the upper surface of the filter 3-320 and the upper surface of the bracket 3-310 to bond them together. Specifically, the second adhesive 3-500 is applied along the edge of the upper surface of the filter 3-320, i.e., the second adhesive 3-500 is located in a non-optical path region, so as to prevent stray light generated by reflection of the second adhesive 3-500 from entering the receiving cavity 3-330, and to prevent the second adhesive 3-500 from affecting the light-receiving area of the filter 3-320.

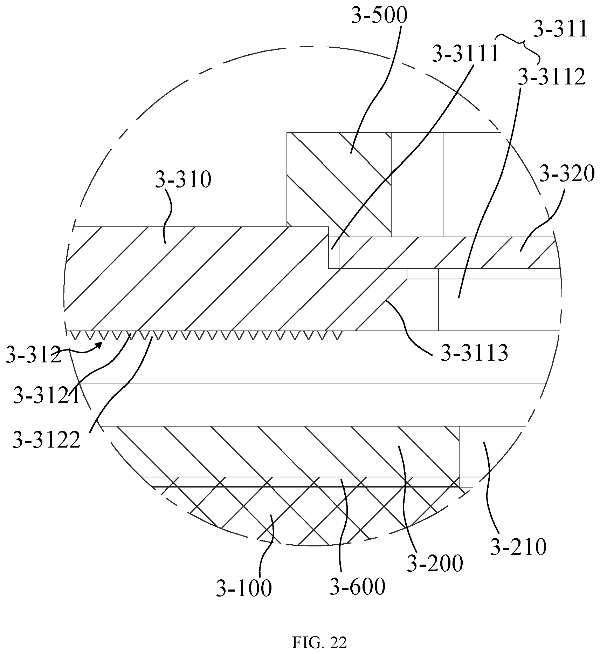

Referring to FIG. 22, specifically, in one embodiment, the LiDAR 3-20 further comprises a third adhesive 3-600. The receiver chip 3-200 is bonded to the circuit board 3-100 via the third adhesive 3-600. The third adhesive 3-600 is used to secure the receiver chip 3-200 on the circuit board 3-100, maintaining the fixed relative position of the receiver chip 3-200 and the filter 3-320 so that echo light can be stably transmitted to the receiver chip 3-200. At the same time, the third adhesive 3-600 also plays a role in heat conduction, transferring the heat generated by the receiver chip 3-200 out of the receiving cavity 3-330 and reducing the operating temperature of the receiver chip 3-200 to prevent signal anomalies caused by overheating. Optionally, the third adhesive 3-600 has good thermal conductivity and may be a silicone thermally conductive adhesive, an epoxy thermally conductive adhesive, thermally conductive gel, or polyurethane thermally conductive adhesive.

It is understood that the receiver chip 3-200 is electrically connected to the circuit board 3-100. The circuit board 3-100 can control the receiver chip 3-200 to receive echo light through the circuit connected to the receiver chip 3-200, and the receiver chip 3-200 can transmit the obtained signals to the circuit board 3-100. Specifically, the receiver chip 3-200 is provided with pins. Gold wires electrically connect the pins of the receiver chip 3-200 to the circuit board 3-100, achieving electrical connection between the receiver chip 3-200 and the circuit board 3-100.

Referring to FIGS. 20 and 21, in one embodiment, the LiDAR 3-20 further comprises a transmitter chip 3-700 and a fourth adhesive (not shown). The transmitter chip 3-700 is mounted on the circuit board 3-100 and is located outside the receiving cavity 3-330. The transmitter chip 3-700 is bonded to the circuit board 3-100 via the fourth adhesive.

It is understood that the transmitter chip 3-700 is used to emit detection light. By placing the transmitter chip 3-700 outside the receiving cavity 3-330, physical isolation between the transmitter chip 3-700 and the receiver chip 3-200 is achieved, preventing interference between the detection light emitted by the transmitter chip 3-700 and the echo light received by the receiver chip 3-200. The fourth adhesive is used to secure the transmitter chip 3-700 on the circuit board 3-100, maintaining the fixed relative position of the transmitter chip 3-700 and the receiver chip 3-200 so that detection light can exit along the set optical path. At the same time, the fourth adhesive also plays a role in heat conduction, transferring the heat generated by the transmitter chip 3-700 to reduce its operating temperature, preventing abnormal laser emission caused by overheating. Optionally, the fourth adhesive has good thermal conductivity and may be a silicone thermally conductive adhesive, an epoxy thermally conductive adhesive, thermally conductive gel, or polyurethane thermally conductive adhesive.

Correspondingly, the transmitter chip 3-700 is electrically connected to the circuit board 3-100. The circuit board 3-100 can control the transmitter chip 3-700 to emit detection light through the circuit connected to the transmitter chip 3-700. Specifically, the transmitter chip 3-700 is provided with pins. Gold wires electrically connect the pins of the transmitter chip 3-700 to the circuit board 3-100, achieving electrical connection between the transmitter chip 3-700 and the circuit board 3-100.

By disposing both the transmitter chip 3-700 and the receiver chip 3-200 on the same circuit board 3-100, the mounting brackets and connecting cables needed for the transmitter chip 3-700 and the receiver chip 3-200 are eliminated, reducing the number of components in the LiDAR 3-20 and achieving miniaturization of the LiDAR 3-20. At the same time, the positions at which the transmitter chip 3-700 and the receiver chip 3-200 are mounted on the same circuit board 3-100 are fixed, reducing the complexity of calibrating the transmitter chip 3-700 and the receiver chip 3-200 during multi-module assembly.

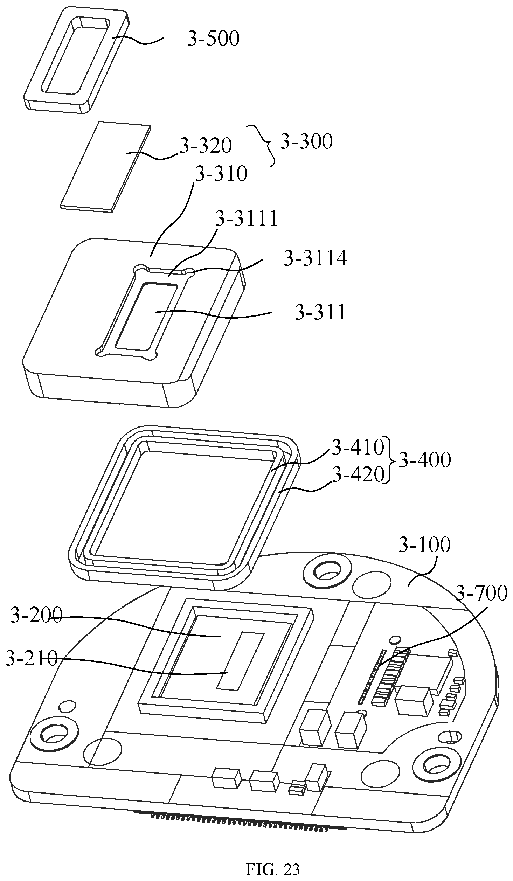

Referring to FIGS. 22 and 23, in one embodiment, the bracket 3-310 has a receiving window 3-311 disposed opposite to the chip. The receiving window 3-311 comprises a mounting groove 3-3111 and a reflection groove 3-3112. The mounting groove 3-3111 is recessed from the outer surface of the bracket 3-310 toward the receiver chip 3-200. The filter 3-320 is mounted within the mounting groove 3-3111. The reflection groove 3-3112 is recessed from the inner surface of the bracket 3-310 toward the mounting groove 3-3111 and communicates with the mounting groove 3-3111. In the receiving direction in which the receiver chip 3-200 receives echo light, the radial distance between the inner peripheral wall of the reflection groove 3-3112 and the central axis of the receiving window 3-311 gradually increases to form an annular reflective inclined surface 3-3113.

On the one hand, by recessing the mounting groove 3-3111 from the outer surface of the bracket 3-310 toward the receiver chip 3-200, when the filter 3-320 is installed in the mounting groove 3-3111, the mounting groove 3-3111 can limit the position of the filter 3-320, preventing the filter 3-320 from rocking circumferentially in the mounting groove 3-3111 and improving the stability of the connection between the filter 3-320 and the bracket 3-310.

On the other hand, it is understood that the end of the receiver chip 3-200 facing the filter 3-320 is the receiving surface, which includes a sensing area 3-210 and a non-sensing area. Only when echo light falls onto the sensing area 3-210 can the receiver chip 3-200 convert the corresponding optical signal into an electrical signal. Generally, the sensing area 3-210 of the receiver chip 3-200 is disposed directly opposite to the receiving window 3-311. When echo light falls into the sensing area 3-210, in addition to receiving this echo light and converting it into electrical signals, the receiver chip 3-200 also reflects the echo light to a certain extent from the receiving surface region corresponding to the sensing area 3-210. The reflected light forms stray light that may interfere with the echo light normally falling on the sensing area 3-210, or this stray light may re-reflect and fall back onto the sensing area 3-210, both of which reduce the signal-to-noise ratio of the echo light received by the receiver chip 3-200 and decrease the measurement accuracy and precision of the LiDAR 3-20.

By recessing the reflection groove 3-3112 from the inner surface of the bracket 3-310 toward the mounting groove 3-3111, and making the radial distance between the inner peripheral wall of the reflection groove 3-3112 and the central axis of the receiving window 3-311 gradually increase in the receiving direction in which the receiver chip 3-200 receives echo light, an annular reflective inclined surface 3-3113 is formed. The stray light formed by reflection from the receiving surface region corresponding to the sensing area 3-210 can be reflected by the reflective inclined surface 3-3113 to outside the sensing area 3-210 (outside the sensing area 3-210 includes the non-sensing area in the receiver chip 3-200 and other areas in the receiving cavity 3-330 other than the receiver chip 3-200), thereby preventing this stray light from falling back onto the sensing area 3-210 and improving the signal-to-noise ratio of the received signal.

In one embodiment, the angle between the reflective inclined surface 3-3113 and the central axis of the receiving window 3-311 is not less than 30° and not greater than 60°. Specifically, the angle between the reflective inclined surface 3-3113 and the central axis of the receiving window 3-311 may be 30°, 45°, or 60°. When the angle is too small, the stray light described above cannot be effectively received and thus cannot be reflected to outside the sensing area 3-210. The mounting groove 3-3111 and the reflection groove 3-3112 communicate, and since the filter 3-320 is installed in the mounting groove 3-3111, a stepped structure is formed between the inner peripheral wall of the mounting groove 3-3111 and the inner peripheral wall of the reflection groove 3-3112. The filter 3-320 rests on this stepped structure. When the angle is too large, the strength of this stepped structure decreases. Since this stepped structure supports the filter 3-320, under external vibration, this stepped structure is prone to fracture under the vibration of the filter 3-320, leading to overall failure of the chip packaging structure 3-10 and affecting the service life of the receiver chip 3-200.

Optionally, in one embodiment, the angle between the reflective inclined surface 3-3113 and the central axis of the receiving window 3-311 is 45°. At this angle, the reflective inclined surface 3-3113 can balance the receiving area and light-guiding effect while ensuring the strength of the stepped structure.

It is understood that after the stray light described above is reflected by the reflective inclined surface 3-3113 to outside the sensing area 3-210, it may re-reflect multiple times between the inner wall surface of the bracket 3-310, the non-sensing area, and the circuit board 3-100, and potentially fall back onto the sensing area 3-210.

In view of this, referring to FIG. 22, in one embodiment, the inner wall surface of the bracket 3-310 facing the circuit board 3-100 is provided with a light-reflecting texture structure 3-312 surrounding the reflection groove 3-3112. The light-reflecting texture structure 3-312 comprises a plurality of protrusions 3-3121. A concave portion 3-3122 is defined between each two adjacent protrusions 3-3121.

By providing a plurality of protrusions 3-3121 surrounding the reflection groove 3-3112 on the inner wall surface of the bracket 3-310 facing the circuit board 3-100, a concave portion 3-3122 is defined between each two adjacent protrusions 3-3121, i.e., the light-reflecting texture structure 3-312 makes the inner wall surface of the bracket 3-310 facing the circuit board 3-100 have a continuous concave-convex structure. When the stray light described above reflects onto the region of the inner wall surface of the bracket 3-310 provided with the light-reflecting texture structure 3-312, it will be reflected multiple times between adjacent protrusions 3-3121. During the multiple reflections, the energy of the stray light is consumed, further reducing the influence of the stray light on the reception of echo light by the sensing area 3-210.

Optionally, in one embodiment, in the receiving direction in which the receiver chip 3-200 receives echo light, the cross-sectional area of each protrusion 3-3121 perpendicular to the receiving direction gradually decreases.

It is understood that in the receiving direction in which the receiver chip 3-200 receives echo light, the cross-sectional area of each protrusion 3-3121 perpendicular to the receiving direction gradually decreases, meaning that the distance between adjacent protrusions 3-3121 gradually increases in the receiving direction. Viewing the distance between adjacent protrusions 3-3121 as the opening of the concave portion 3-3122, the opening of the concave portion 3-3122 at the end near the circuit board 3-100 is larger relative to the opening at the end near the bracket 3-310. On the one hand, the larger opening at the end near the circuit board 3-100 makes it easier to receive stray light reflected from the circuit board 3-100 or the receiver chip 3-200. On the other hand, the smaller opening at the end near the bracket 3-310 allows stray light that has entered the concave portion 3-3122 to be reflected multiple times between adjacent protrusions 3-3121, making it more difficult to exit the concave portion 3-3122.

Specifically, taking the extension direction of the protrusion 3-3121 toward the circuit board 3-100 as the thickness direction of the protrusion 3-3121, the cross-sectional shape of the protrusion 3-3121 in the thickness direction may be an inverted triangle or an inverted trapezoid. The present application does not limit the specific shape of the protrusion 3-3121, as long as it can receive and reflect stray light multiple times.

Referring to FIG. 23, in one embodiment, both the filter 3-320 and the mounting groove 3-3111 are rectangular. The corner positions of the mounting groove 3-3111 are provided with relief grooves 3-3114 for relieving the corner positions of the filter 3-320.

By providing relief grooves 3-3114 at the corner positions of the mounting groove 3-3111, when installing the filter 3-320, the corner positions of the filter 3-320 can be embedded in the corresponding relief grooves 3-3114. The corners of the filter 3-320 do not contact the inner wall of the mounting groove 3-3111, preventing chip fracture at the corners due to stress concentration when installing the filter 3-320 or when subject to external forces. That is, by providing the relief grooves 3-3114 to eliminate rigid contact between the filter 3-320 and the mounting groove 3-3111, mechanical damage to the filter 3-320 is prevented. At the same time, the provision of the relief grooves 3-3114 can also accommodate thermal expansion deformation of the filter 3-320, maintaining the long-term stability of the connection between the filter 3-320 and the bracket 3-310.

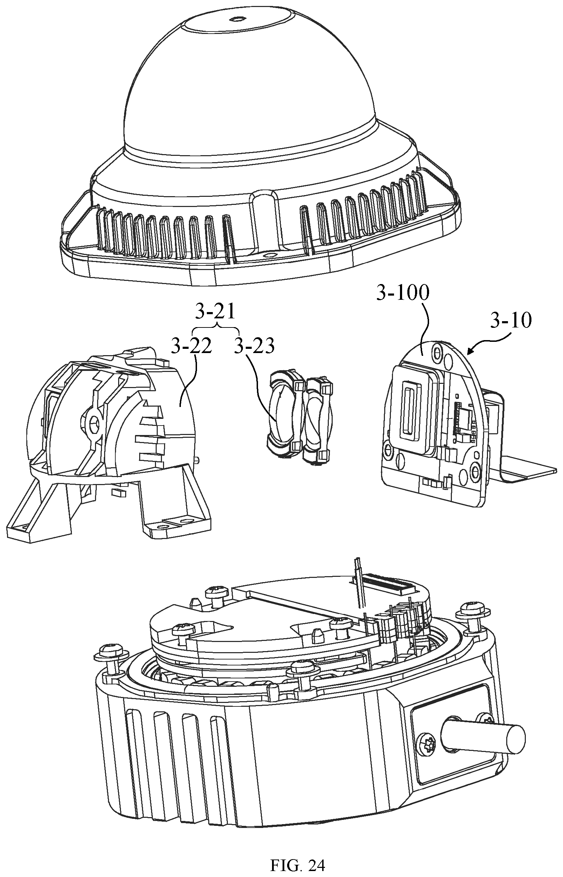

Referring to FIGS. 19 and 24, in one embodiment, the LiDAR 3-20 further comprises a lens barrel assembly 3-21. The lens barrel assembly 3-21 comprises a lens barrel 3-22 and lenses 3-23 disposed on the lens barrel 3-22. At least a portion of the lenses 3-23 are located on the side of the filter 3-320 facing away from the receiver chip 3-200.

It should be noted that the lenses 3-23 include a receiving lens. The receiving lens is located on the side of the filter 3-320 facing away from the receiver chip 3-200, and the receiving optical axis of the receiving lens passes through the filter 3-320. The receiving lens is used to focus echo light, and the focused echo light can more accurately fall onto the sensing area 3-210 of the receiver chip 3-200 after filtering by the filter 3-320.

Correspondingly, when the transmitter chip 3-700 and the receiver chip 3-200 are mounted on the same circuit board 3-100, the lenses 3-23 also include a transmitting lens. The transmitting lens is located on the side of the receiver chip 3-200 facing away from the circuit board 3-100, and the transmitting optical axis of the transmitting lens passes through the transmitter chip 3-700. The transmitting lens converts the divergent beam emitted by the transmitter chip 3-700 into a collimated beam, preventing the detection light from rapidly diverging after emission, thereby effectively extending the transmission distance of the detection light and improving the detection range of the LiDAR 3-20.

Specifically, the lens barrel 3-22 has a transmitting lens cavity and a receiving lens cavity. The transmitting lens described above is mounted in the transmitting lens cavity, and the receiving lens is mounted in the receiving lens cavity. The transmitting lens cavity and the receiving lens cavity are spaced apart to prevent interference between the detection light emitted by the transmitter chip 3-700 and the echo light received by the receiver chip 3-200.

A LiDAR device obtains relevant information about a target by transmitting detection light toward the target and then comparing the received echo light reflected back from the target with the detection light after appropriate processing. A LiDAR device can accurately measure target position, motion state, and shape, and can detect, identify, discriminate, and track targets. Due to its advantages of fast measurement speed, high precision, and long detection range, it has been widely applied in fields such as intelligent vehicles.

The energy intensity and angle of echo light reflected from targets at different distances differ. When the LiDAR needs to detect distant target objects, it needs to receive as much far-range echo light as possible to improve detection accuracy for distant target objects. In this case, the received near-range echo light interferes with the far-range echo light, and receiving too much near-range echo light may cause the LiDAR to be blinded, affecting its normal detection function. When the LiDAR needs to detect nearby target objects, it needs to receive as much near-range echo light as possible to improve detection accuracy for nearby target objects. In some LiDARs with off-axis transceiving systems, near-range and far-range objects produce echo light beams at different angles, and the LiDAR cannot receive large-angle near-range echo light, resulting in a near-range blind zone. The optical receiving system of the LiDAR needs to accommodate the reception of both near-range echo light and far-range echo light, resulting in generally mediocre reception of both.

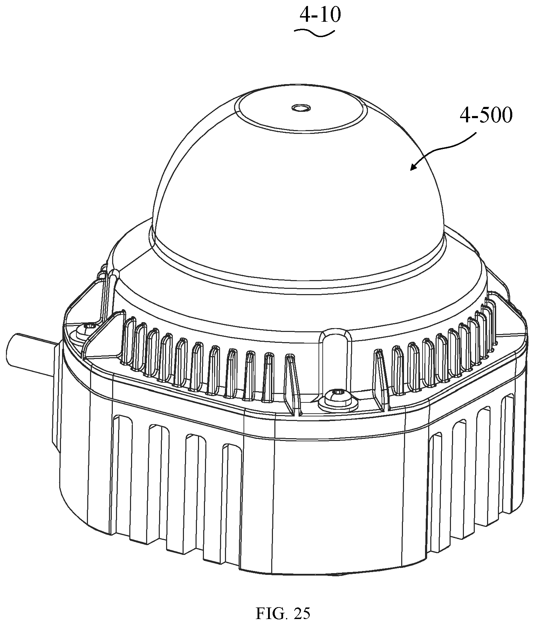

Referring to FIGS. 25 through 27, the present application proposes a LiDAR 4-10. The LiDAR 4-10 comprises a transmitting module 4-100 and a receiving module 4-200.

The transmitting module 4-100 comprises a transmitting lens 4-110 and a laser 4-120. The laser 4-120 is used to emit detection light. The transmitting lens 4-110 is used to receive the detection light and emit it to the external environment of the LiDAR 4-10 to detect target objects.

The receiving module 4-200 comprises a receiving lens 4-210, a light-modulating element 4-220, and a detector 4-230. Along the extending direction of the receiving optical axis 4-700 of the receiving lens 4-210, the receiving lens 4-210 is disposed between the light-modulating element 4-220 and the detector 4-230. The light-modulating element 4-220 is used to adjust the flux or transmission direction of echo light at different distances passing through the light-modulating element 4-220. The echo light at different distances is formed by reflections of detection light from target objects at different distances. The receiving lens 4-210 is used to receive the echo light and transmit it to the detector 4-230.

It should be noted that the receiving optical axis 4-700 is parallel to the transmitting optical axis 4-600 of the transmitting lens 4-110. That is, the transmitting module 4-100 and the receiving module 4-200 constitute an off-axis transceiving system, achieving spatial separation of the transmitting and receiving optical paths, significantly reducing stray light interference caused by laser light emitted by the transmitting module 4-100 directly reflecting or scattering into the receiving module 4-200. The off-axis transceiving system does not require complex optical beamsplitting elements, simplifying the system design and reducing manufacturing costs. Moreover, this system has relatively loose optical alignment tolerance, reducing strict requirements on mechanical precision, which is conducive to improving production efficiency and long-term operational stability.

Correspondingly, in the off-axis transceiving system, the acceptance field of view corresponding to nearby target objects is larger and is not easily received by the finite-sized detector 4-230. When the detector 4-230 receives an incomplete near-range echo signal, it cannot process the far-range echo signal within the recovery time (the time required to process the echo signal). The LiDAR 4-10 can neither obtain information about the nearby target object nor reduces the accuracy of information about some distant target objects. At the same time, since near-range echo light has stronger energy than far-range echo light, when the LiDAR 4-10 detects target objects, if the detector 4-230 receives too much near-range echo light, the LiDAR 4-10 may be blinded, affecting its normal detection function.

By disposing the light-modulating element 4-220 on the light-incident side of the receiving lens 4-210 to adjust the transmission direction of echo light formed by reflections of detection light from target objects at different distances passing through the light-modulating element 4-220, one embodiment of LiDAR 4-10 changes the incident angle of near-range echo light so that the near-range echo light that would originally have been unable to fall onto the receiving lens 4-210 is transmitted to the receiving lens 4-210, enabling the near-range echo light transmitted via the receiving lens 4-210 to be effectively received by the detector 4-230 to ultimately obtain information data of the corresponding near-range target objects, reducing the near-range blind zone of the LiDAR 4-10 and improving the detection accuracy of the LiDAR 4-10 for near-range target objects. Alternatively, another embodiment of LiDAR 4-10 changes the incident angle of near-range echo light so that at least a portion of the near-range echo light cannot fall onto the receiving surface of the detector 4-230, thereby reducing the influence of near-range echo light on the reception of far-range echo light by the detector 4-230, while also preventing the LiDAR 4-10 from being blinded due to excessive near-range echo light received by the detector 4-230, thereby improving the detection capability of the LiDAR 4-10 for far-range target objects.

By disposing the light-modulating element 4-220 on the light-incident side of the receiving lens 4-210 to adjust the flux of echo light formed by reflections of detection light from target objects at different distances passing through the light-modulating element 4-220, one embodiment of LiDAR 4-10 increases the flux of far-range echo light passing through the light-modulating element 4-220, thereby improving the detection capability of the LiDAR 4-10 for far-range target objects.

Specifically, echo light formed by reflections of detection light from far-range target objects is referred to as far-range echo light, and echo light formed by reflections of detection light from near-range target objects is referred to as near-range echo light, wherein the distance of far-range target objects from the light-modulating element 4-220 is greater than the distance of near-range target objects from the LiDAR 4-10.

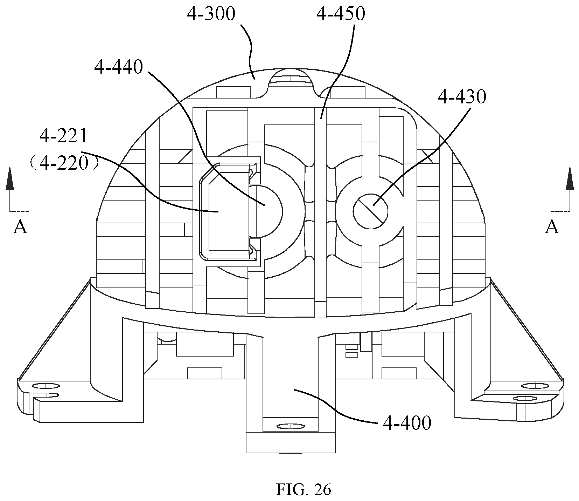

Referring to FIGS. 26 through 28, in some embodiments, the light-modulating element 4-220 comprises a light-refracting member 4-221. The light-refracting member 4-221 is used to deflect near-range echo light toward the receiving lens 4-210, so that the near-range echo light can be transmitted to the detector 4-230 via the receiving lens 4-210.

It should be noted that since near-range target objects are closer to the LiDAR 4-10 relative to far-range target objects, before far-range echo light and near-range echo light are transmitted to the receiving lens 4-210 through the receiving optical path of the LiDAR 4-10, the angle between near-range echo light and the receiving optical axis 4-700 of the receiving lens 4-210 is greater than the angle between far-range echo light and the receiving optical axis 4-700. Therefore, part of the near-range echo light cannot fall onto the receiving lens 4-210, or after being transmitted by the receiving lens 4-210, it cannot fall onto the receiving surface of the detector 4-230. The receiving surface refers to the sensing area of the detector 4-230 that can convert optical signals into electrical signals.

By disposing the light-refracting member 4-221 on the light-incident side of the receiving lens 4-210, the near-range echo light passing through the light-refracting member 4-221 is deflected to reduce its angle with the receiving optical axis 4-700, so that the near-range echo light that would originally have been unable to fall onto the receiving lens 4-210 is transmitted to the receiving lens 4-210. At the same time, near-range echo light that could not fall onto the receiving surface of the detector 4-230 after being transmitted by the receiving lens 4-210 can now be effectively received by the detector 4-230, to ultimately obtain information data of the corresponding near-range target objects, reducing the near-range blind zone of the LiDAR 4-10 and improving the detection accuracy of the LiDAR 4-10 for near-range target objects.

Specifically, the light-refracting member 4-221 has a light-incident surface 4-2211 and a light-exiting surface 4-2212 that are non-parallel to each other. The light-incident surface 4-2211 is used to receive near-range echo light and deflect it into the light-refracting member 4-221. The light-exiting surface 4-2212 is used to receive near-range echo light incident from the light-incident surface 4-2211 and deflect it toward the receiving lens 4-210.

For example, in some embodiments, the light-incident surface 4-2211 and the light-exiting surface 4-2212 are disposed at an angle to each other. The light-refracting member 4-221 uses two surfaces, the light-incident surface 4-2211 and the light-exiting surface 4-2212, arranged at an angle to deflect near-range echo light toward the receiving surface of the detector 4-230. Near-range echo light passes through fewer interfaces, which facilitates reducing the design difficulty of the light-refracting member 4-221 and the assembly and fitting difficulty within the receiving module 4-200. It should be noted that the light-refracting member 4-221 may also have a reflective surface. Near-range echo light entering the light-refracting member 4-221 through the light-incident surface 4-2211 may also be deflected via one or more reflective surfaces before reaching the light-exiting surface 4-2212, and further deflected by the light-exiting surface 4-2212 toward the receiving surface.

Optionally, the light-refracting member 4-221 comprises a wedge prism. The wedge prism has a first end face, a second end face, and a plurality of side faces connecting the first end face and the second end face. The plurality of side faces include the light-incident surface 4-2211 and the light-exiting surface 4-2212. The wedge prism may also have a first end face, a second end face, and a curved surface connecting the first end face and the second end face. The first end face and the second end face respectively serve as the light-incident surface 4-2211 and the light-exiting surface 4-2212. The light-incident surface 4-2211 receives near-range echo light and deflects it into the wedge prism, and the light-exiting surface 4-2212 receives near-range echo light incident from the light-incident surface 4-2211 and deflects it toward the receiving surface. Since the wedge prism has a relatively regular structure, the above-described deflection of near-range echo light toward the receiving surface of the detector 4-230 via the wedge prism facilitates the optimized arrangement of the wedge prism within the LiDAR 4-10.

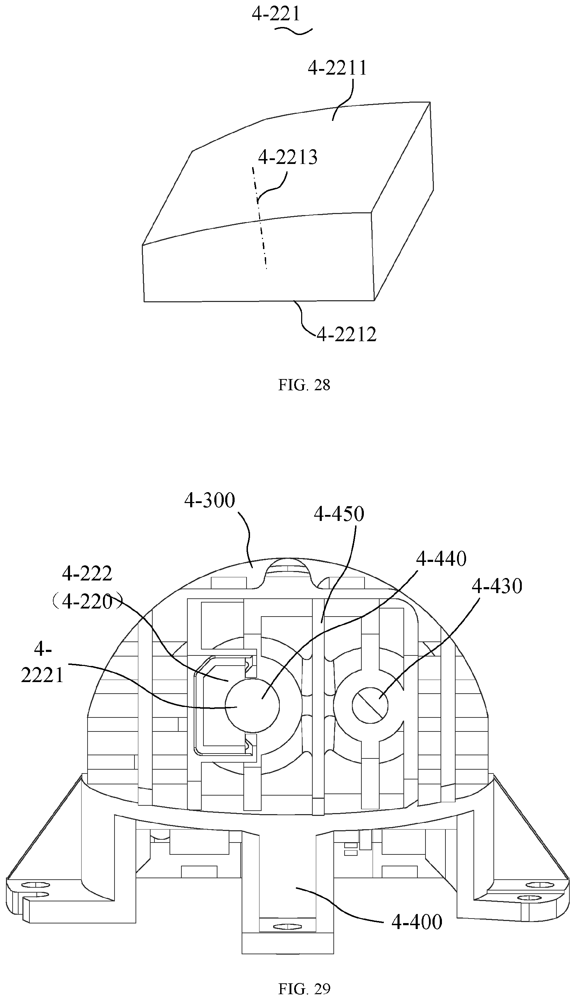

Continuing to refer to FIG. 28, in another embodiment, the light-incident surface 4-2211 is curved. Optionally, the light-refracting member 4-221 comprises a cylindrical lens. The cylindrical lens may be configured as a cylinder, with both the light-incident surface 4-2211 and the light-exiting surface 4-2212 being curved peripheral surfaces of the cylinder. The cylindrical lens may also be configured with opposing first and second end faces and a side face connecting the first and second end faces. The first end face is a curved light-incident surface 4-2211, and the second end face may be a curved light-exiting surface 4-2212, in which case the side face is also curved. The second end face may be a flat light-exiting surface 4-2212, in which case there are multiple side faces, all flat.

The light-incident surface 4-2211 has a first end close to the receiving optical axis 4-700 and a second end far from the receiving optical axis 4-700. From the first end to the second end, the farther from the first end, the closer the portion of the light-incident surface 4-2211 to the receiving surface along the extending direction of the receiving optical axis 4-700. In this way, the normal 4-2213 of the light-incident surface 4-2211 extends from the light-incident surface 4-2211 toward the upper left as shown in the figure. Therefore, the light-incident surface 4-2211 can deflect near-range echo light and reduce its angle with the receiving optical axis 4-700 after deflection, preventing the phenomenon where near-range echo light incident along the normal 4-2213 of the light-incident surface 4-2211 cannot be deflected.

The light-exiting surface 4-2212 may be perpendicular to the receiving optical axis 4-700 of the receiving lens 4-210. Compared to the light-exiting surface 4-2212 being inclined relative to the receiving optical axis 4-700, this can reduce the difficulty of adapting the relative position of the light-refracting member 4-221 and the receiving lens 4-210 and reduce the assembly difficulty of the light-refracting member 4-221. It should be noted that the light-exiting surface 4-2212 may also be set inclined relative to the receiving optical axis 4-700 or in other shapes depending on the available space within the LiDAR 4-10, without limitation.

It is understood that the light-refracting member 4-221 also deflects far-range echo light passing through it. Before far-range echo light is transmitted to the receiving lens 4-210, its angle with the receiving optical axis 4-700 is small. After far-range echo light is deflected by the light-refracting member 4-221, its angle with the receiving optical axis 4-700 may increase, preventing it from falling onto the receiving lens 4-210. Part of the far-range echo light transmitted to the receiving lens 4-210 via the light-refracting member 4-221 may also be unable to fall onto the receiving surface of the detector 4-230 after being transmitted by the receiving lens 4-210 due to the change in incident angle. The far-range echo light ultimately received by the detector 4-230 decreases, reducing the accuracy and precision of information data about distant target objects obtained by the LiDAR 4-10, i.e., by reducing the detection capability of the LiDAR 4-10 for some distant target objects, the detection capability for nearby target objects is improved.

Specifically, the larger the projected area of the light-refracting member 4-221 on the receiving lens 4-210 along the receiving optical axis 4-700, the smaller the number of far-range echo light beams that can be received by the detector after passing through the light-refracting member 4-221.

Therefore, in some embodiments, the light-modulating element 4-220 comprises a light-refracting member 4-221 configured to deflect near-range echo light toward the receiving lens 4-210. The light-refracting member 4-221 is provided with a light-transmitting notch disposed opposite to the receiving lens 4-210, configured to allow far-range echo light to pass through and be transmitted to the receiving lens 4-210.

By disposing the light-refracting member 4-221 on the light-incident side of the receiving lens 4-210, near-range echo light passing through the light-refracting member 4-221 is deflected to reduce its angle with the receiving optical axis 4-700, enabling near-range echo light that would originally be unable to fall onto the receiving lens 4-210 to reach the receiving lens 4-210, and enabling near-range echo light that could not fall onto the receiving surface of the detector 4-230 after being transmitted by the receiving lens 4-210 to be effectively received by the detector 4-230, ultimately obtaining information data of the corresponding near-range target objects, reducing the near-range blind zone of the LiDAR 4-10 and improving detection accuracy for near-range target objects.

By providing the light-transmitting notch on the light-refracting member 4-221, the projected area of the light-refracting member 4-221 on the receiving lens 4-210 along the receiving optical axis is reduced. When improved detection capability for near-range target objects is desired, the area of the light-transmitting notch can be reduced so that the light-refracting member 4-221 can receive more near-range echo light and deflect it toward the receiving lens 4-210. Correspondingly, when improved detection capability for far-range target objects is desired, the area of the light-transmitting notch can be increased to allow more far-range echo light to pass through the light-transmitting notch to the receiving lens 4-210, improving detection accuracy for distant target objects, and reducing the influence of near-range echo light on the reception of far-range echo light by the detector 4-230, comprehensively improving detection capability for distant target objects. Different LiDARs 4-10 can have the light-transmitting notch of the light-refracting member 4-221 set to different areas to maximize detection capability for near-range target objects, or to improve detection capability for near-range target objects while retaining as much detection capability for far-range target objects as possible.

In other embodiments, the light-modulating element 4-220 comprises a light-refracting member 4-221 and a light-attenuating film. The light-refracting member 4-221 deflects near-range echo light toward the receiving lens 4-210. The light-attenuating film is disposed on the light-incident side of the light-refracting member 4-221, at least to reduce the flux of near-range echo light passing through the light-refracting member 4-221.

By disposing a light-attenuating film on the light-incident side of the light-refracting member 4-221 to reduce the flux of near-range echo light passing through the light-refracting member 4-221, when improved detection capability for near-range target objects is desired, the coverage area of the light-attenuating film on the light-refracting member 4-221 can be reduced or the blocking rate of the light-attenuating film for near-range echo light can be decreased, allowing the light-refracting member 4-221 to receive more near-range echo light and deflect it toward the receiving lens 4-210. Correspondingly, when improved detection capability for far-range target objects is desired, the coverage area of the light-attenuating film on the light-refracting member 4-221 can be increased or the blocking rate of the light-attenuating film for near-range echo light can be increased, reducing the number of near-range echo light beams deflected to the receiving lens 4-210, and reducing the influence of near-range echo light on the reception of far-range echo light by the detector 4-230, improving detection capability for distant target objects.

Furthermore, the light-attenuating film may be set to have different blocking rates for far-range echo light and near-range echo light. When the LiDAR 4-10 is used to detect distant target objects, the blocking rate of the light-attenuating film for far-range echo light is less than that for near-range echo light, to increase the flux of far-range echo light while reducing that of near-range echo light, thereby reducing the influence of near-range echo light on the reception of far-range echo light by the detector 4-230 and improving the accuracy and precision of information data about distant target objects. When the LiDAR 4-10 is used to detect nearby target objects, the blocking rate of the light-attenuating film for far-range echo light is greater than that for near-range echo light, to increase the flux of near-range echo light while reducing that of far-range echo light, improving the detection capability of the LiDAR 4-10 for nearby target objects.

It is understood that the light-attenuating film may also be disposed on the light-exiting side of the light-refracting member 4-221, or on both the light-incident and light-exiting sides simultaneously. Different LiDARs 4-10 can have the light-attenuating film on the light-refracting member 4-221 set to different areas or the blocking rate for near-range echo light adjusted to maximize detection capability for near-range target objects, or to improve detection capability for near-range target objects while retaining as much detection capability for far-range target objects as possible.

Optionally, the light-modulating element 4-220 comprises a light-blocking member 4-222. The light-blocking member 4-222 is used to block near-range echo light from being transmitted to the receiving lens 4-210 during detection of distant target objects. By using the light-blocking member 4-222 to block near-range echo light, the light-blocking member 4-222 can be configured to completely block or absorb all incident near-range echo light, making the flux of near-range echo light passing through the light-modulating element 4-220 zero. Specifically, the light-blocking member 4-222 may be a light-blocking plate, or may be a protective cover plate originally present on the receiving optical path. The light-blocking member 4-222 may also comprise a transparent lens and a shading layer disposed on the transparent lens, achieving complete blocking or absorption of near-range echo light by providing the shading layer.

It is understood that when detecting distant target objects, although the light-blocking member 4-222 reduces the number of near-range echo light beams transmitted to the detector 4-230, it also reduces the number of far-range echo light beams transmitted to the detector 4-230. The receiving lens 4-210 receives far-range echo light that has not passed through the light-blocking member 4-222 and transmits it to the detector 4-230. The larger the projected area of the light-blocking member 4-222 on the receiving lens 4-210 along the extending direction of the receiving optical axis 4-700, i.e., the larger the blocking area of the light-blocking member 4-222 on the receiving lens 4-210, the smaller the number of far-range echo light beams directly transmitted to the receiving lens 4-210 without passing through the light-blocking member 4-222, reducing the detection capability of the LiDAR 4-10 for distant target objects. By adjusting the projected area of the light-modulating element 4-220 on the receiving lens 4-210 along the extending direction of the receiving optical axis 4-700, the influence of near-range echo light on the reception of far-range echo light by the detector 4-230 can be reduced while retaining the detection capability of the LiDAR 4-10 for distant target objects.

Referring to FIG. 29, for example, in some embodiments, the light-blocking member 4-222 is disposed on the side of the receiving optical axis 4-700 facing away from the transmitting module 4-100. The side of the light-blocking member 4-222 near the receiving optical axis 4-700 is provided with a light-passing notch 4-2221. The light-passing notch 4-2221 is disposed opposite to the receiving lens 4-210, and part of the far-range echo light passes through the light-passing notch 4-2221 and is transmitted to the receiving lens 4-210.

Since the angle between near-range echo light and the receiving optical axis 4-700 of the receiving lens 4-210 is greater than the angle between far-range echo light and the receiving optical axis 4-700, before near-range echo light is incident on the receiving lens 4-210, it is more concentrated on the side of the receiving optical axis 4-700 facing away from the transmitting module 4-100. By disposing the light-blocking member 4-222 on the side of the receiving optical axis 4-700 facing away from the transmitting module 4-100, more near-range echo light can be received by the light-blocking member 4-222, enhancing the adjustment effect of the light-blocking member 4-222 on the flux of echo light at different distances transmitted to the receiving lens 4-210. By providing the light-passing notch 4-2221 on the side of the light-blocking member 4-222 near the receiving optical axis 4-700, far-range echo light can be transmitted to the receiving lens 4-210 through the light-passing notch 4-2221, increasing the number of far-range echo light beams transmitted directly to the receiving lens 4-210 without passing through the light-blocking member 4-222, and preventing excessive impact on the detection capability of the LiDAR 4-10 for distant target objects.

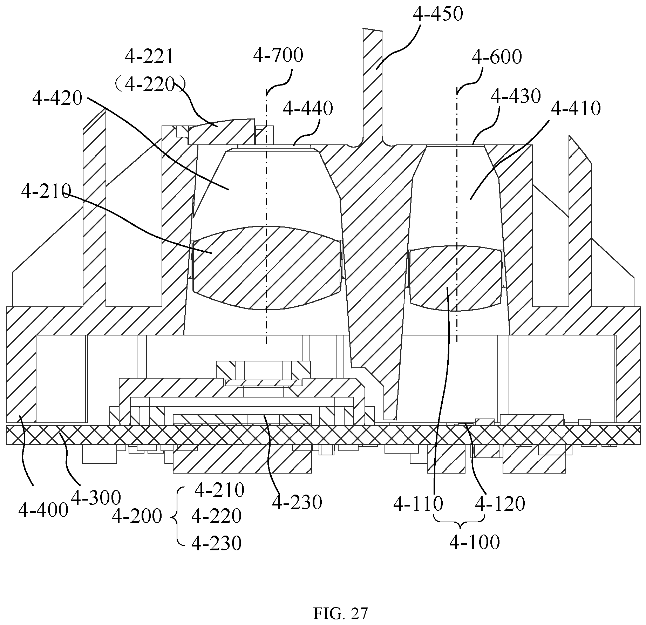

Referring to FIGS. 26 and 27, in some embodiments, the LiDAR 4-10 further comprises a circuit board 4-300 and a lens barrel 4-400. The laser 4-120 and the detector 4-230 are mounted on the same side of the circuit board 4-300. The lens barrel 4-400 is mounted on the circuit board 4-300. The lens barrel 4-400 has a transmitting lens cavity 4-410 and a receiving lens cavity 4-420 spaced apart from each other. The transmitting lens 4-110 is mounted within the transmitting lens cavity 4-410, and the receiving lens 4-210 is mounted within the receiving lens cavity 4-420. The side of the lens barrel 4-400 facing away from the circuit board 4-300 has a light-outlet port 4-430 and a light-inlet port 4-440 communicating with the transmitting lens cavity 4-410 and the receiving lens cavity 4-420, respectively. The light-modulating element 4-220 is disposed at the light-inlet port 4-440.

The laser 4-120 and the transmitting lens 4-110 are disposed opposite to each other, so that detection light emitted by the laser 4-120 can be received by the transmitting lens 4-110 and exit through the light-outlet port 4-430 to outside the transmitting lens cavity 4-410, ultimately exiting to the external environment of the LiDAR 4-10 to detect target objects. Detection light reflected by a target object forms echo light, which is incident into the receiving lens cavity 4-420 through the light-inlet port 4-440 and ultimately transmitted to the receiving surface of the detector 4-230. By using the spaced-apart transmitting lens cavity 4-410 and receiving lens cavity 4-420, physical isolation of detection light and echo light within the lens barrel 4-400 is achieved, preventing interference between the detection light emitted by the laser 4-120 and the echo light received by the detector 4-230, which would affect the accuracy and precision of the final detection data for target objects.

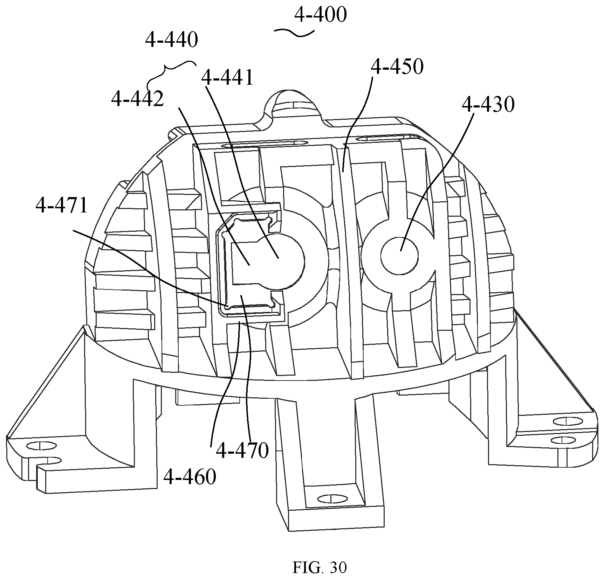

Referring to FIG. 30, in some embodiments, the light-inlet port 4-440 comprises a connected first light-inlet region 4-441 and second light-inlet region 4-442. The receiving optical axis 4-700 passes through the first light-inlet region 4-441. The second light-inlet region 4-442 is located on the side of the first light-inlet region 4-441 away from the light-outlet port 4-430. The light-modulating element 4-220 is disposed at least at the second light-inlet region 4-442.

For example, the first light-inlet region 4-441 may be circular with the receiving optical axis 4-700 as the center, and the second light-inlet region 4-442 may be shaped as a rectangle minus the overlapping portion with the circle. When the light-modulating element 4-220 comprises the light-refracting member 4-221, the light-refracting member 4-221 may be rectangular, covering the second light-inlet region 4-442 while also covering part of the first light-inlet region 4-441. The part of the first light-inlet region 4-441 covered by the light-refracting member 4-221 is on the side of the receiving optical axis 4-700 away from the light-outlet port 4-430. Since the angle between near-range echo light and the receiving optical axis 4-700 of the receiving lens 4-210 is greater than the angle between far-range echo light and the receiving optical axis 4-700, near-range echo light is more concentrated on the side of the receiving optical axis 4-700 facing away from the transmitting module 4-100 before being incident on the receiving lens 4-210. By disposing the light-refracting member 4-221 at the second light-inlet region 4-442 and the portion of the first light-inlet region 4-441 on the side of the receiving optical axis 4-700 away from the light-outlet port 4-430, more near-range echo light can be received by the light-refracting member 4-221, enhancing the detection capability of the LiDAR 4-10 for nearby target objects.

When the light-modulating element 4-220 comprises the light-blocking member 4-222, the light-blocking member 4-222 is disposed at the second light-inlet region 4-442, i.e., the light-blocking member 4-222 covers the second light-inlet region 4-442 without blocking the first light-inlet region 4-441. Far-range echo light can be directly transmitted to the receiving lens 4-210 through the first light-inlet region 4-441. The light-blocking member 4-222 blocks far-range and near-range echo light passing through the second light-inlet region 4-442, thereby reducing the influence of near-range echo light on the reception of far-range echo light by the detector 4-230 while retaining the detection capability of the LiDAR 4-10 for distant target objects.

It should be noted that the first light-inlet region 4-441 and the second light-inlet region 4-442 may also be fan-shaped or polygonal shapes other than rectangles, without limitation.

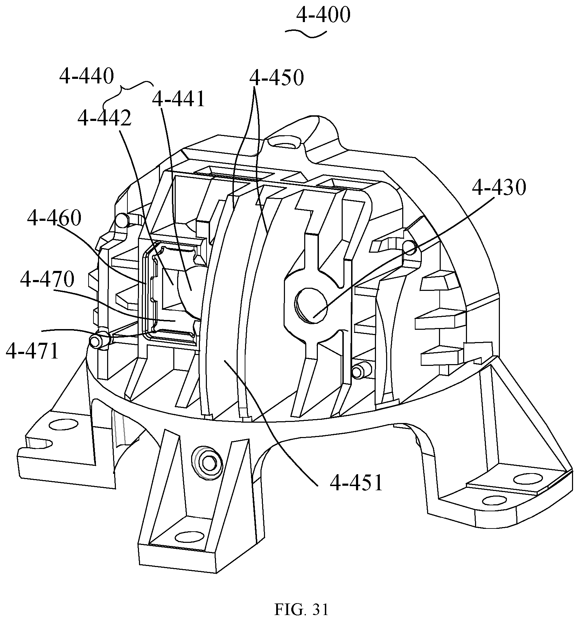

Referring to FIGS. 30 and 31, in some embodiments, the side of the lens barrel 4-400 facing away from the circuit board 4-300 is provided with a light-blocking rib 4-450. The light-blocking rib 4-450 is located between the light-inlet port 4-440 and the light-outlet port 4-430 and extends in a direction away from the lens barrel 4-400.

By disposing the light-blocking rib 4-450 between the light-inlet port 4-440 and the light-outlet port 4-430, mutual crosstalk between detection light and echo light can be suppressed; for example, suppressing stray light generated by the emitted detection light from propagating to the light-inlet port 4-440, thus preventing interference with the final detection data. Correspondingly, by disposing the light-modulating element 4-220 on the side of the receiving optical axis 4-700 away from the transmitting module 4-100, i.e., the light-modulating element 4-220 is relatively far from the light-blocking rib 4-450, interference of the light-blocking rib 4-450 with the light-modulating element 4-220 during installation can be avoided, reducing the installation difficulty of the light-modulating element 4-220.

Furthermore, there may be multiple light-blocking ribs 4-450, distributed at intervals along a first direction. Adjacent light-blocking ribs 4-450 may form a light-trapping cavity 4-451 between the light-outlet port 4-430 and the light-inlet port 4-440. The first direction is the direction in which the light-inlet port 4-440 and the light-outlet port 4-430 are spaced. This light-trapping cavity 4-451 suppresses mutual crosstalk between detection light and echo light; for example, suppressing stray light generated by the emitted detection light from propagating to the light-inlet port 4-440.

Referring to FIGS. 29 through 31, in some embodiments, the side of the lens barrel 4-400 facing away from the circuit board 4-300 is provided with a positioning rib 4-460 disposed around the light-inlet port 4-440. The positioning rib 4-460 and the lens barrel 4-400 form a mounting groove 4-470 matching the outer shape of the light-modulating element 4-220. The mounting groove 4-470 communicates with the light-inlet port 4-440. The light-modulating element 4-220 is installed within the mounting groove 4-470. By providing the positioning rib 4-460 to form the mounting groove 4-470 together with the lens barrel 4-400, when the light-modulating element 4-220 is installed in the mounting groove 4-470, it abuts the lens barrel 4-400, reducing the gap between the light-modulating element 4-220 and the receiving lens 4-210. At the same time, the peripheral sides of the light-modulating element 4-220 are surrounded by the positioning rib 4-460, preventing stray light from being generated on the peripheral sides of the light-modulating element 4-220. Specifically, the light-modulating element 4-220 and the positioning rib 4-460 may be connected by bonding or other means, without limitation.

Furthermore, in some embodiments, the light-modulating element 4-220 has corner positions, and the corner positions of the mounting groove 4-470 are provided with relief grooves 4-471 for relieving the corner positions of the light-modulating element 4-220. By providing relief grooves 4-471 at the corner positions of the mounting groove 4-470, when installing the light-modulating element 4-220, the corner positions of the light-modulating element 4-220 can be embedded in the corresponding relief grooves 4-471. The corner positions of the light-modulating element 4-220 do not contact the inner wall of the mounting groove 4-470, preventing chip fracture at the corners due to stress concentration when installing the light-modulating element 4-220 or when subject to external forces. By providing relief grooves 4-471 to eliminate rigid contact between the light-modulating element 4-220 and the mounting groove 4-470, mechanical damage to the light-modulating element 4-220 is prevented. At the same time, the provision of the relief grooves 4-471 can also accommodate thermal expansion deformation of the light-modulating element 4-220, maintaining the long-term stability of the installation of the light-modulating element 4-220.

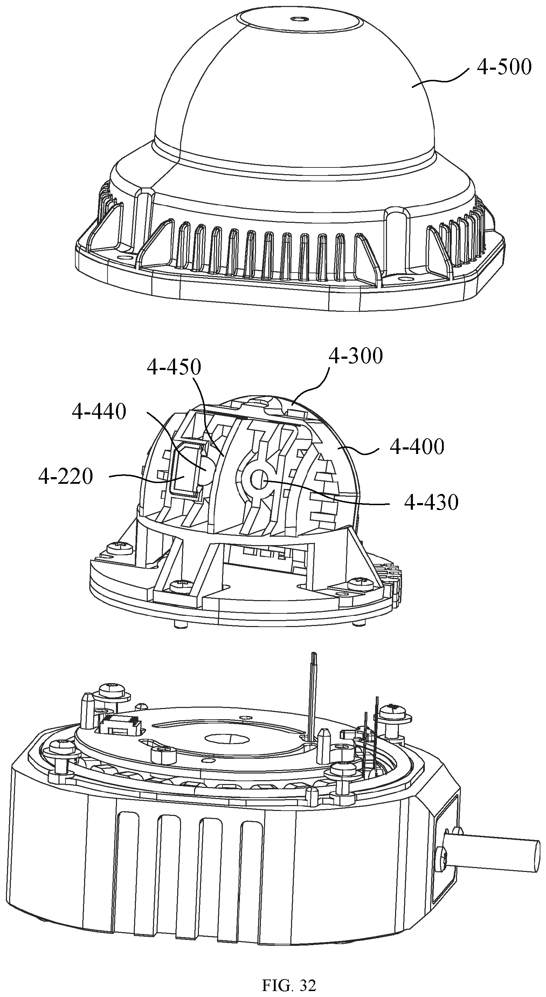

Referring to FIGS. 25 and 32, in some embodiments, the LiDAR 4-10 further comprises a window cover 4-500. The window cover 4-500 covers the lens barrel 4-400 and the circuit board 4-300. Detection light exits through the light-outlet port 4-430 to outside the transmitting lens cavity 4-410 and then passes through the window cover 4-500 to ultimately exit to the external environment. Echo light formed by reflection from a target object passes through the window cover 4-500 and then is incident into the receiving lens cavity 4-420 through the light-inlet port 4-440. The window cover 4-500 protects the internal components including the transmitting module 4-100 and the receiving module 4-200, while allowing detection light to exit and echo light to enter.

In the description of the present application, it should be understood that terms such as "first" and "second" are used for descriptive purposes only and should not be interpreted as indicating or implying relative importance. For those skilled in the art, the specific meanings of the above terms in the present application can be understood according to the specific circumstances. In addition, in the description of the present application, unless otherwise stated, "plurality" means at least two, such as two, three, four, etc. "And/or" describes the association of associated objects, indicating that three types of relationships can exist; for example, A and/or B can represent: A alone exists, A and B coexist, B alone exists. The character "/" generally indicates that the front and rear associated objects are in an "or" relationship.

The above are only the preferred embodiments of the present application and are not intended to limit the scope of the claims of the present application. Therefore, equivalent changes made in accordance with the claims of the present application are still within the scope covered by the present application.

## Claims

1. A LiDAR, comprising:
a housing comprising a base;
an optical assembly disposed within the housing;
a heat-dissipating bracket disposed within the housing, wherein the optical assembly is mounted on the heat-dissipating bracket; and
a driving member disposed within the housing, the driving member comprising a magnetic member and an electromagnetic winding disposed opposite to each other, the magnetic member being mounted on one of the base and the heat-dissipating bracket, and the electromagnetic winding being mounted on the other one of the base and the heat-dissipating bracket, wherein the magnetic member and the electromagnetic winding cooperate to drive the heat-dissipating bracket to rotate relative to the base, thereby enabling the optical assembly to rotate relative to the base.

2. The LiDAR of claim 1, wherein the base defines an accommodation cavity and an opening communicating with the accommodation cavity, an end face of the base at surrounding the opening defines a step, and one of the magnetic member and the electromagnetic winding is seated on a step surface of the step.

3. The LiDAR of claim 2, wherein the magnetic member is disposed around a rotation axis of the optical assembly, the electromagnetic winding is disposed around the rotation axis of the optical assembly, and the step is disposed around the rotation axis of the optical assembly.

4. The LiDAR of any one of claims 1 to 3, wherein the electromagnetic winding comprises: an iron core having a plurality of mounting positions circumferentially spaced apart; and a plurality of coils, wherein the coils are wound in one-to-one correspondence at the mounting positions.

5. The LiDAR of claim 1, wherein the heat-dissipating bracket defines a positioning portion, one of the magnetic member and the electromagnetic winding that is fixed relative to the heat-dissipating bracket is provided with a positioning mating portion, and the positioning portion is connected to the positioning mating portion.

6. The LiDAR of claim 5, wherein one of the positioning portion and the positioning mating portion is a positioning groove and the other is a positioning protrusion, and at least a portion of the positioning protrusion extends into the positioning groove.

7. The LiDAR of claim 1, further comprising: a main circuit board disposed within the housing and between the optical assembly and the heat-dissipating bracket, wherein the optical assembly is electrically connected to the main circuit board.

8. The LiDAR of claim 7, wherein the magnetic member is mounted on the base, the electromagnetic winding is mounted on the heat-dissipating bracket, and the electromagnetic winding is electrically connected to the main circuit board.

9. The LiDAR of claim 7, further comprising: a power board disposed within the housing and fixed relative to the base; a wireless charging transmitter unit disposed within the housing, the wireless charging transmitter unit being fixed relative to the base and electrically connected to the power board; and a wireless charging receiver unit disposed within the housing, the wireless charging receiver unit being fixed relative to the heat-dissipating bracket and electrically connected to the main circuit board.

10. The LiDAR of claim 9, wherein the power board and the main circuit board are located on opposite sides of the heat-dissipating bracket.

11. The LiDAR of claim 9, further comprising: a code disc fixed relative to one of the base and the heat-dissipating bracket, the code disc being provided with a plurality of detection portions arranged circumferentially; and a photoelectric switch fixed relative to the other one of the base and the heat-dissipating bracket, wherein when the heat-dissipating bracket rotates relative to the base, the photoelectric switch sequentially corresponds to the plurality of detection portions; wherein the power board is located between the code disc and an inner bottom wall of the base; and/or the code disc is fixed relative to the base, the code disc is provided with a limit hook, and the limit hook hooks the power board.
